Europäisches Patentamt

European Patent Office

Office européen des brevets

(19)

(11) EP 1 594 029 A2

(12) EUROPEAN PATENT APPLICATION

(43) Date of publication:
09.11.2005 Bulletin 2005/45

(51) Int Cl.$^7$: G06F 1/00

(21) Application number: 05009353.3

(22) Date of filing: 28.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 30.04.2004 JP 2004136419

(71) Applicant: SONY CORPORATION
Tokyo (JP)

(72) Inventors:
• Hamano, Atsushi Sony Corporation
Tokyo (JP)
• Shinozaki, Ikuo Sony Corporation
Tokyo (JP)

(74) Representative: Körber, Martin Hans et al
Mitscherlich & Partner
Patentanwälte
Sonnenstrasse 33
80331 München (DE)

(54) **Method and system for protecting individual information**

(57) A program capable of protecting private data with a small processing amount appropriately with high reliability, by which a server apparatus transmits hash data of an booted program to a client apparatus, the client apparatus transmits the hash data and encoded private data to the server apparatus after negotiation, and the server apparatus performs matching of the hash data to use the private data.

FIG. 1

**EP 1 594 029 A2**

**Description**

CROSS REFERENCES TO RELATED APPLICATIONS

The present invention contains subject matter related to Japanese Patent Application No. 2004-136419 filed in the Japan Patent Office on April 30, 2004, the entire content of which being incorporated by reference.

BACKGROUND OF THE INVENTION

1. Field of the Invention

The present invention relates to a program, a computer, a data processing method, a communication system and the method for protecting individual information and other private data.

2. Description of the Related Art

There is the case, for example, a client apparatus accesses to a predetermined server apparatus in response to an operation by a user to transmit private data from the client apparatus to the server apparatus in response to a request from the server apparatus.

In a system of the related art, for example, after processing of confirming an agreement to terms of use of the private data between the client apparatus and the server apparatus, the client apparatus encodes the private data with a predetermined encryption key and transmits to the server apparatus.

Also, the client apparatus transmits terms of use data of the private data to the serve apparatus.

The server apparatus transmits its own ID and the terms of use data to a Trusted Third Party (TTP) server apparatus.

The TTP server apparatus verifies validity of the server apparatus based on the ID and verifies whether the server apparatus is provided with a software environment for performing processing in accordance with the terms of use data.

When the TTP server apparatus confirms validity of the ID and determines that the server apparatus is provided with the above environment, it transmits a decryption key data to the server apparatus.

Then, the server apparatus decodes the private data based on the decryption key data and uses the decoded private data in a form being in accordance with the terms of use data.

[Non-Patent Article 1] "The Platform for Privacy Preferences 1.0 (P3P1.0) Specification", W3C Recommendation, 2002

[Non-Patent Article 2] Yolanta Beres, et. al. "Enforceability of Enterprise Privacy Policies", Technical Report: HPL-2003-119, Hewlett-Packard, 2003

SUMMARY OF THE INVENTION

However, in the above explained system of the related art, processing by a TTP server apparatus is necessary and an amount of processing is large.

Also, in the above explained system of the related art, privacy data may not be protected by the server apparatus when the software environment of the server apparatus is changed during the time after verification of the predetermined server by the TTP server until transmission of the private data from the client apparatus to the server apparatus.

The present invention was made in consideration of the above disadvantages of the related art, and a program, a computer, a data processing method, a communication system and the methods capable of protecting private data with high reliability with a small processing amount are provided.

According to a first invention, there is provided a program for a computer to execute a first step of verifying validity of a utilization side by matching first hash data of a program booted by the utilization side of data and second hash data stored in advance; and a second step of transmitting the first hash data and data to be used or key data for decoding the data to be used to the utilization side on condition that validity of the utilization side is confirmed in the first step.

An operation of the program of the first invention is as below.

A computer matches first hash data of a program booted by a utilization side of data and second hash data held in advance and validity of the utilization side is verified in accordance with the first step of the program of the first invention.

Next, by following the second step, the computer transmits the first hash data and data to be used or key data for decoding the data to be used to the utilization side on condition of confirmation of validity of the utilization side by the first step.

According to a second invention, there is provided a computer comprising an interface; a memory for storing a program; and an execution circuit for matching first hash data of a program booted at a utilization side of data and second hash data stored in advance by following the program read from the memory and, on condition that validity of the utilization side is confirmed, transmitting the first hash data and data to be used or key data for decoding the data to be used to the utilization side via the interface.

An operation of the computer of the second invention is as below.

By following the program read from a memory, the execution circuit matches first hash data of a program booted by a utilization side of data and second hash data held in advance.

Next, on condition that of validity of the utilization side is confirmed by the above matching by the execution circuit, the first hash data and data to be used or a key data for decoding the data to be used are transmitted to the utilization side via the interface.

According to a third invention, there is provided a data processing method executed by a computer, including a first step of verifying validity of a utilization side by matching first hash data of a program booted by the utilization side of data and second hash data stored in advance; an a second step of transmitting the first hash data and data to be used or key data for decoding the data to be used to the utilization side on condition that validity of the utilization side is confirmed in the first step.

According to a fourth invention, there is provided a program for making a computer to execute a first step of booting a program; a second step of generating first hash data of the program booted in the first step and storing the same in a secured state; a third step of transmitting first hash data generated in the second step to a data provider; and a fourth step of authorizing use of data provided by the data provider, performed after the third step on condition that second hash data received from the data provider matches with the first hash data stored in the second step.

An operation of the program of the fourth invention is as below.

The computer boots a program by following the first step of the program of the fourth invention.

Next, by following the second step, first hash data of the program booted in the first step is generated and stored in a secure state.

Next, by following the third step, the first hash data generated in the second step is transmitted to a data provider.

Next, by following the fourth step, on condition that the second hash data received from the data provider matches with the first hash data stored in the second step, use of the data provided from the data provider is authorized.

According to a fifth invention, there is provided a computer, comprising an interface; a memory for storing a first program and a second program for realizing a data protecting function; and an execution circuit, when the first program is read from the memory and booted, for generating first hash data of the booted first program and storing to the memory in a secure state by following the second program read from the memory, transmitting the first hash data to a data provider via the interface and, on condition that second hash data received from the data provider via the interface matches with the first hash data read from the memory, authorizing use of data provided from the data provider.

An operation of the computer as the fifth invention is as below.

When the execution circuit reads the first program from the memory and boots, by following the second program read from the memory, first hash data of the booted first program is generated and stored in the memory in a secure state.

Next, the execution circuit transmits the first hash data to the data provider via the interface.

Next, on condition that the second hash data received from the data provider via the interface matches with the first hash data read from the memory, the execution circuit gives authorization of using data provided by the data provider.

According to a sixth invention, there is provided a data processing method executed by a computer, including a first step of booting a program; a second step of generating first hash data of a program booted in the first step and storing the same in a secure state; a third step for transmitting first hash data generated in the second step to a data provider; and a fourth step for authorizing use of data received from the data provider on condition that second hash data received from the data provider matches with the first hash data stored in the second step.

According to a seventh invention, there is provided a communication system comprising a first computer as a data provider and a second computer as a data provided destination, wherein the first computer comprises a first interface, a first memory for storing a first program and second hash data; and a first execution circuit for matching first hash data received from the second computer via the first interface and the second hash data read from the first memory and, on condition that validity of the second computer is confirmed, transmitting the first hash data and data to be used or key data for decoding the data to be used to the second computer via the second interface by following the first program read from the first memory; and the second computer comprises a second interface; a second memory for storing a second program and a third program for realizing a data protecting function; and a second execution circuit for, when the second program is read from the second memory and booted, generating the first hash data of the booted second program and storing to the second memory in a secure state by following the third program read from the second memory, transmitting the first hash data to the first computer via the second interface and, on condition that the first hash data received from the first computer via the second interface matches with the first hash data stored in the second memory in a secure state, authorizing use of the data to be used provided by the first computer.

According to an eighth invention, there is provided a communication method, used between a first computer as a data provider and a second computer as a data provided destination, including a first step of generating first hash data of an booted program, storing the same in a secure state and transmitting the first hash data to the first computer, performed by the second computer; a second step of matching the first hash data received from the second computer in the first step and second hash data stored in advance and, on condition that validity of the second computer is confirmed, transmitting the first hash data and data to be used or key data for decoding the data to be used to the second computer, performed by the first computer; and a third step that the second computer uses the data to be used provided by the first computer on condition that the first hash data received in the second step matches with the first hash data stored in a the secure state in the first step.

According to the present invention, it is possible to provide a program, a computer, a data processing method, a communication system and the method capable of protecting private data with high reliability with a small processing amount.

BRIEF DESCRIPTION OF DRAWINGS

These and other objects and features of the present invention will become clearer from the following description of the preferred embodiments given with reference to the attached drawings, in which:

FIG. 1 is a view of the overall configuration of a communication system of a first embodiment of the present invention;
FIG. 2 is a view for explaining an outline of communication between a client apparatus C and a server apparatus S1 shown in FIG. 1;
FIG. 3 is a view of the configuration of the client apparatus C shown in FIG. 1 and FIG. 2;
FIG. 4 is a flowchart for explaining pre-processing performed by the client apparatus C before communicating with the server apparatus S1;
FIG. 5 is a view of the configuration of the server apparatus S1 shown in FIG. 1 and FIG. 2;
FIG. 6 is a view for explaining a software environment of the server apparatus S1 shown in FIG. 1 and FIG. 2;
FIG. 7 is a view of the configuration of a security chip SC shown in FIG. 5;
FIG. 8 is a flowchart for explaining processing performed by the security chip SC when the server apparatus S1 is booted;
FIG. 9 is a flowchart for explaining an operation example of the case of transmitting private data PRID from the client apparatus C to the server apparatus S1 shown in FIG. 1;
FIG. 10 is a flowchart for explaining an operation example of the case of transmitting private data PRID from the client apparatus C to the server apparatus S1 shown in FIG. 1 in a second embodiment of the present invention;
FIG. 11 is a flowchart for explaining an operation example of the case of transmitting private data PRID from the client apparatus C to the server apparatus S1 shown in FIG. 1 in a third embodiment of the present invention;
FIG. 12 is a flowchart continued from FIG. 11 for explaining an operation example of the case of transmitting private data PRID from the client apparatus C to the server apparatus S1 shown in FIG. 1 in the third embodiment of the present invention;
FIG. 13 is a flowchart for explaining an operation example of the case of transmitting private data PRID from the client apparatus C to the server apparatus S1 in FIG. 1 in a fourth embodiment of the present invention;
FIG. 14 is a flowchart continued from FIG. 13 for explaining an operation example of the case of transmitting private data PRID from the client apparatus C to the server apparatus S1 shown in FIG. 1 in the fourth embodiment of the present invention;
FIG. 15 is a flowchart for explaining an operation example of the case of transmitting private data PRID from the client apparatus C to the server apparatus S1 shown in FIG. 1 in a fifth embodiment of the present invention;
FIG. 16 is a flowchart for explaining an operation example of the case of transmitting private data PRID from the client apparatus C to the server apparatus S1 shown in FIG. 1 in a sixth embodiment of the present invention;
FIG. 17 is a view for explaining a seventh embodiment of the present invention;
FIG. 18 is a view for explaining an eighth embodiment of the present invention;
FIG. 19 is a view for explaining a ninth embodiment of the present invention; and
FIG. 20 is a view for explaining a tenth embodiment of the present invention.

DESCRIPTION OF THE PREFERRED EMBODIMENT

Below, a communication system according to embodiments of the present invention will be explained.

First Embodiment

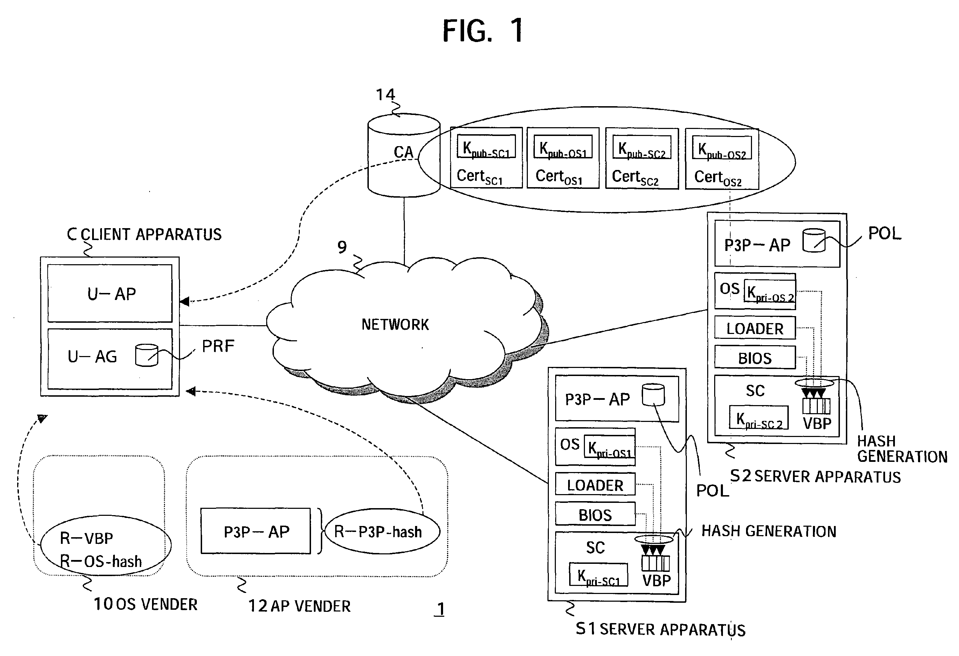

Below, with reference to FIG. 1 to FIG. 9, a first embodiment of the present invention will be explained.

[Corresponding Relationship with Configuration of the Present Invention]

First, corresponding relationship of components of the present embodiments and components of the present invention will be explained.

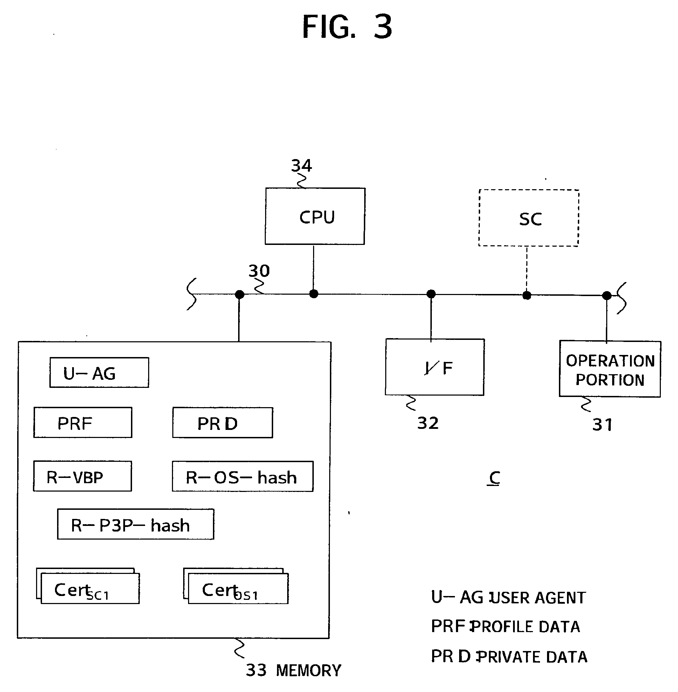

A user agent program U_AG shown in FIG. 3 corresponds to the program of the first and second inventions.

The client apparatus C corresponds to the computer of the first and second invention and the first computer of the seventh and eighth invention.

The client apparatus C corresponds to the data provider of the fourth to sixth inventions.

Verification data of boot program VBP and hash data OS-hash of the present embodiment correspond to the first hash data of the first to eighth inventions and the second hash data of the fourth to sixth inventions.

Reference verification data of boot program R-VBP and reference hash data R-OS-hash of the present embodiment correspond to the second hash data of the first to third, seventh and eighth inventions.

Private data PRID of the present embodiment corresponds to data of the present invention.

User profile data PRF of the present embodiment corresponds to first use condition data of the first invention and the use condition data of the fourth invention.

Also, privacy policy data POL of the present embodiment corresponds to the second use condition data of the first invention.

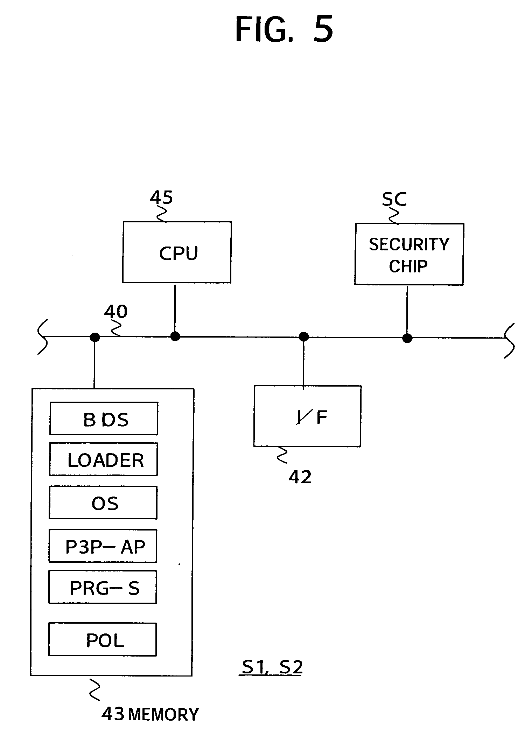

A program PRG-S shown in FIG. 5 corresponds to the program of the fifth invention and the second program of the sixth invention.

Also, the program BIOS, a loader program "Loader", an operating system OS and application program P3P-AP of the present embodiment correspond to "the program booted at the utilization side of data" of the first to third inventions and the first program of the fourth and fifth inventions.

Also, the server apparatus S1 of the present embodiment corresponds to the computer of the fifth and sixth inventions and the second computer of the seventh and eighth inventions.

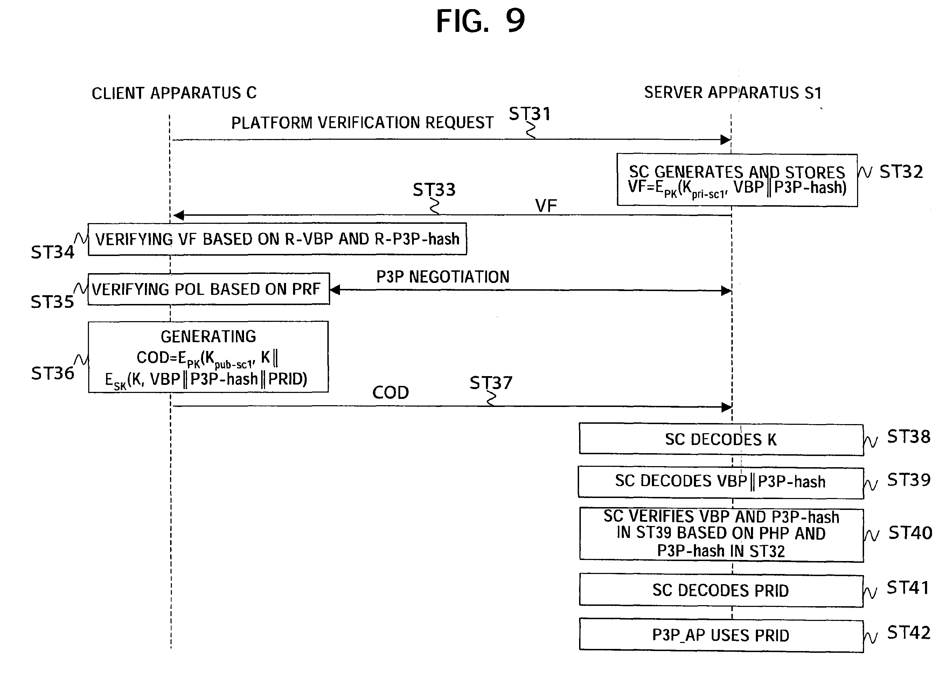

The step ST34 shown in FIG. 9 corresponds to the first step of the first invention and the first step of the third invention, the steps ST36 and ST37 correspond to the second step of the first invention and the second step of the third invention.

The step ST35 shown in FIG. 9 corresponds to the third step of the first invention.

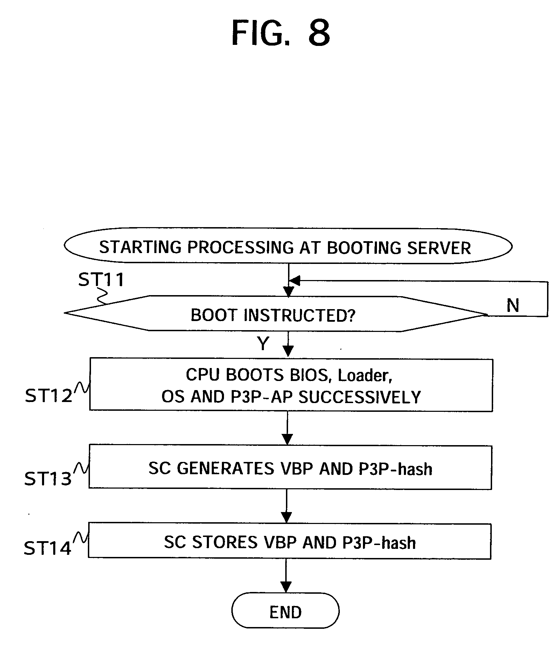

The step ST12 shown in FIG. 8 corresponds to the first step of the fourth invention and the first step of the sixth invention, and the steps ST13 and ST14 shown in FIG. 8 correspond to the second step of the fourth invention and the second step of the sixth invention.

The steps ST32 and ST33 shown in FIG. 9 correspond to the third step of the first invention and the third step of the sixth invention.

The steps ST38 to ST40 shown in FIG. 9 correspond to the fourth step of the first invention and the fourth step of the sixth invention.

Also, the step ST42 shown in FIG. 9 corresponds to the fifth step of the first invention.

A CPU34 shown in FIG. 3 corresponds to the execution circuit of the second invention, an interface 32 corresponds to the interface of the second invention, and a memory 33 corresponds to the memory of the second invention.

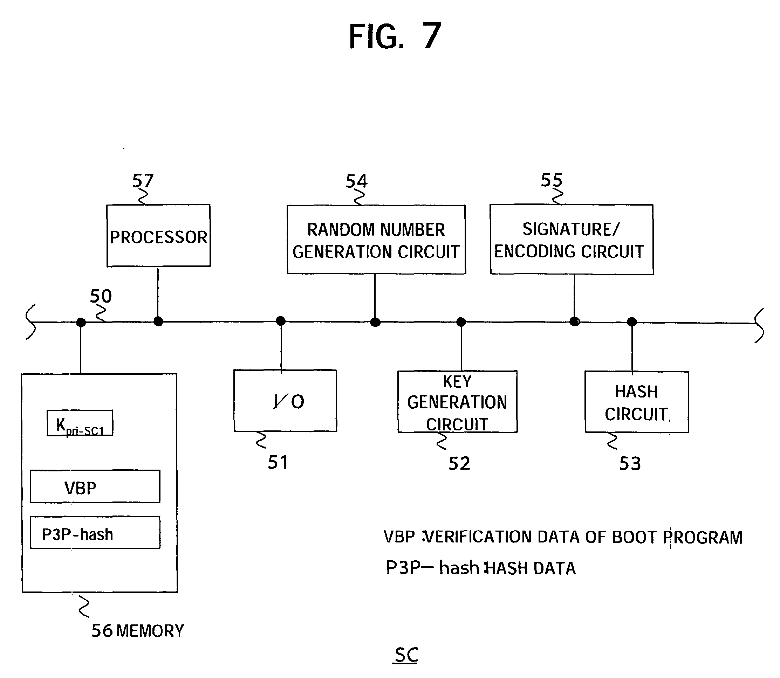

Also, a CPU 45 shown in FIG. 5 and a processor 57 shown in FIG. 7 correspond to the execution circuit of the fifth invention, an interface 42 shown in FIG. 5 corresponds to the interface of the fifth invention, and a memory 43 shown in FIG. 5 and a memory 56 shown in FIG. 7 correspond to the memory of the fifth invention.

[Outline of Present Embodiment]

Below, an outline of a communication system 1 of the present embodiment will be explained with reference to FIG. 1.

For example, a server S1 boots a program, such as a program BIOS (Basic Input/Output System), a loader program "Loader", an operating system OS (Operating system) and an application program P3P-AP (Application Program).

The server apparatus S1 generates verification data of boot program VBP including hash data of the above booted program BIOS, loader program "Loader" and operating system OS and hash data P3P-hash of the booted application program P3P-AP and stores these in a security chip SC in a secure state.

The server apparatus S1 transmits the booted program verification data VBP and hash data P3P-hash to a client apparatus C.

The client apparatus C performs matching by comparing the verification data of boot program VBP and hash data P3P-hash received from the server apparatus S1 with reference verification data of boot program R-VBP and reference hash data R-P3P-hash received from an OS vender 10 and AP vender 12 in advance, respectively, and when the both are matched, it is determined that the server apparatus S1 is provided with a proper software environment (an environment for protecting private data PRID).

Then, on condition that the server apparatus S1 is provided with a proper software environment, the client apparatus C transmits the verification data of boot program VBP, hash data P3P-hash and private data PRID as individual information of a user of the client apparatus C to the server apparatus S1.

On condition that both of the verification data of boot program VBP and hash data P3P-hash received from the client apparatus C match with verification data of boot program VBP and hash data P3P-hash stored in the security chip SC, the security chip SC of the server apparatus S1 uses the private data PRID on the above software environment by following privacy policy data POL declared to the client apparatus C.

In the present embodiment, as explained above, the client apparatus C can directly verify the software environment of the server apparatus S1 without a TTP server apparatus.

Also, in the present embodiment, in the security chip SC of the server apparatus S1 matching is performed by comparing the verification data of boot program VBP and hash data P3P-hash transmitted by the server apparatus S1 and received from the client apparatus with the verification data of boot program VBP and hash data P3P-hash stored in the security chip SC when the program is booted. Therefore, in the case where the software environment of the server apparatus S1 is changed after the client apparatus C verified the server apparatus S1, the server apparatus S1 automatically detects the fact and use of the private data PRID can be prohibited.

As a result, in the server apparatus S1, it can be guaranteed that the private data PRID is used in an appropriately protected form.

Note that, in the present embodiment, in the case where the software environment of the server apparatus S1 is changed after the client apparatus C transmitted the private data PRID to the server apparatus S1 (for example, the case of being changed to an environment wherein a proper application program P3P-AP does not function appropriately), the private data PRID is invalidated.

FIG. 1 is a view of the overall configuration of the communication system 1 of the first embodiment of the present invention.

As shown in FIG. 1, the communication system 1 has, for example, an OS vender 10, an AP vender 12, an authentication authority 14, a client apparatus C and server apparatuses S1 and S2.

[OS Vender 10]

The OS vender 10 is a vender for providing, for example, a program BIOS, a loader program "loader" and an operating system OS installed in the server apparatuses S1 and S2.

Note that the OS vender 10 provides a boot program and other system programs to the server apparatuses S1 and S2 via a network 9 or a recording medium.

The OS vender 10 generates hash data of the operating system OS based on a hash function and provides (transmits) the same as reference hash data R-OS-hash to the client apparatus C in a secure state.

Also, the OS vender 10 generates hash data of each of the program BIOS, loader program "Loader" and operating system OS, generates verification data of boot program VBP obtained by storing them in bit fields, and provides (transmits) the same as reference verification data of boot program R-VBP to the client apparatus C.

[AP Vender 12]

The AP vender 12 is a vender for providing an application program P3P_AP having a P3P (The Platform for Privacy Preference Project) function for protecting private data (individual information) on the network 9, such as the Internet, to the server apparatuses S1 and S2.

The AP vender 12 generates hash data of the application program P3P_AP and provides (transmits) the same as reference hash data R-P3P-AP to the client apparatus C in a secure state.

[Authentication Authority 14]

The authentication authority 14 issues private key data Kpri-sc1, Kpri-os1, Kpri-sc2 and Kpri-os2 respectively to the security chip SC installed in the server apparatus S1, the operating system OS installed in the server apparatus S1, the security chip SC installed in the server apparatus S2 and the operating system OS installed in the server apparatus S2 and provides them in a secure state.

Also, the authentication authority 14 issues public key certification data Cert-sc1, Cert-os1, Cert-sc2, and Cert-os2 corresponding respectively to the private key data Kpri-sc1, Kpri-os1, Kpri-sc2 and Kpri-os2 and provides (transmits) them to the client apparatus C.

Below, the client apparatus C and server apparatus S1 will be explained.

Note that the server apparatus S2 has the same configuration as that of the server apparatus S1.

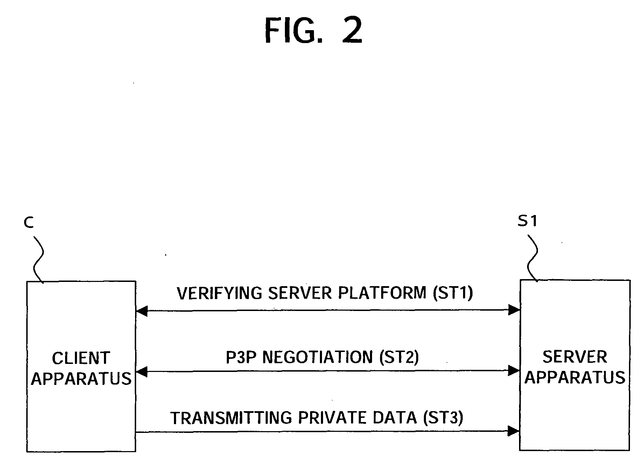

FIG. 2 is a view for explaining an outline of communication between the client apparatus C and the server apparatus S1.

As shown in FIG. 2, the client apparatus C communicates with the server apparatus S1 and verifies a platform of the server apparatus S1 (ST1).

Here, the platform of the server apparatus S1 is a software environment provided by the program BIOS, loader program "Loader", operating system OS and application program P3P-AP booted on the server apparatus S1.

Namely, the client apparatus C verifies whether or not the server apparatus S1 has a predetermined software environment required as a transmission destination of private data of the user of the client apparatus C, specifically, an environment for guaranteeing protection of private data.

Also, the client apparatus C performs negotiation processing for negotiating with the server apparatus S1 a condition for transmitting the private data (step ST2).

Specifically, the client apparatus C compares profile data PRF stored in advance with the privacy policy data POL received from the server apparatus S1 and determines whether or not the server apparatus S1 declares to use the private data in a form required by the user of the client apparatus C.

When it is determined that the server apparatus S1 is provided with an environment for guaranteeing protection of private data and declares to use the private data in the form required by the user of the client apparatus C, the client apparatus C transmits the private data of the user to the server apparatus S1.

[Client Apparatus C]

FIG. 3 is a view of the configuration of the client apparatus C shown in FIG. 1 and FIG. 2.

As shown in FIG. 3, the client apparatus C includes, for example, an operation portion 31, an interface 32, a memory 33 and a CPU 34 connected by data line 30. The interface 32 transmits and receives data and requests to and from the authentication authority 14 and the server apparatuses S1 and S2 via the network 2.

The memory 33 stores reference verification data of boot program R-VBP and reference hash data R-OS-hash.

The memory 33 also stores reference hash data R-P3P-AP.

Also, the memory 33 stores public key certification data Cert-sc1, Cert-os1, Cert-sc2 and Cert-os2.

The memory 33 also stores a user agent program U_AG.

The CPU 34 reads the user agent program U_AG from the memory 33, executes the same, and performs processing explained with reference to FIG. 2 and processing to be explained in detail later on.

Below, pre-processing by the client apparatus C performed before communicating with the server apparatus S1 will be explained.

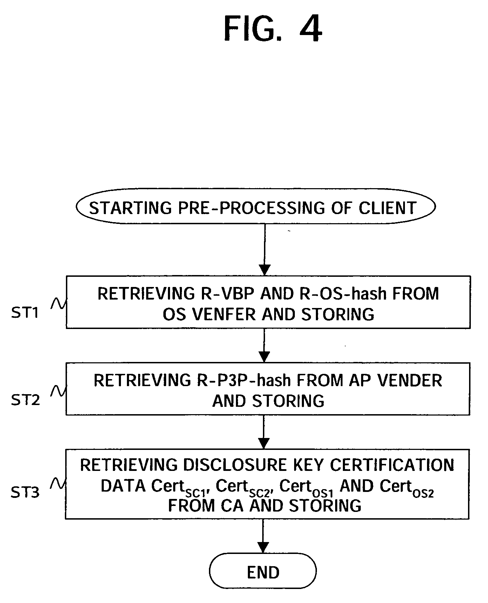

FIG. 4 is a flowchart for explaining the pre-processing.

The pre-processing described below is performed by the CPU 34 of the client apparatus S1 shown in FIG. 3 by following the user agent program U_AG read from the memory 33.

Step ST1:

The CPU 34 receives as an input reference verification data of boot program R-VBP and reference hash data R-OS-hash provided by the OS vender 10, for example, via the interface 32 and writes the same to the memory 33.

Step ST2:

The CPU 34 receives as an input reference hash data R-P3P-AP provided by the AP vender 12, for example, via the interface 32 and writes the same in the memory 33.

Step ST3:

The CPU 34 receives as an input public key certification data Cert-sc1, Cert-os1, Cert-sc2 and Cert-os2 provided by the authentication authority 14, for example, via the interface 32 and writes the same in the memory 33.

Note that the public key certification data Cert-sc1, Cert-os1, Cert-sc2 and Cert-os2 include public key data, respectively.

[Server Apparatus S1]

FIG. 5 is a view of the configuration of the server apparatus S1 shown in FIG. 1 and FIG. 2.

As shown in FIG. 5, the server apparatus S1 has, for example, an interface 42, a memory 43, a security chip SC and a CPU 45 connected by a data line 40.

Note that the server apparatus S2 has the same configuration as that of, for example, the server apparatus S1.

The interface 42 transmits and receives data and requests to and from the client apparatus C via the network 9.

The memory 43 stores the program BIOS, loader program "Loader", operating system OS and application program P3P-AP.

Also, the memory 43 stores a program PRG-S for collectively controlling processing of the server apparatus S1.

The CPU 45 reads a variety of programs stored in the memory 43 and realizes a predetermined software environment.

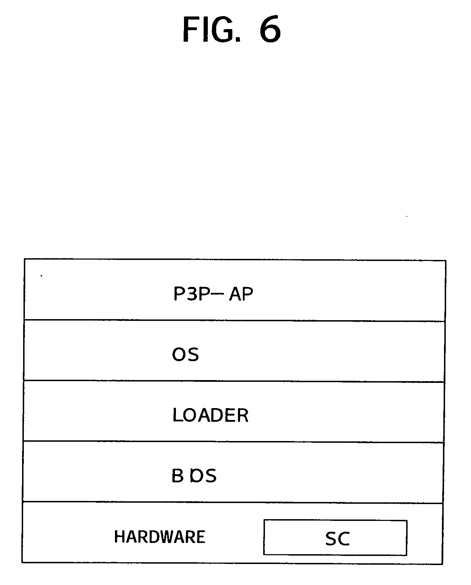

The CPU 45 boots the program BIOS, for example as shown in FIG. 6, on the CPU 45, security chip SC or other hardware.

Also, the CPU 45 makes the loader program "Loader" operate on the program BIOS and boots the operating system OS based on the loader program "Loader".

Also, the CPU 45 boots the application program P3PAP on the operating system OS.

The security chip SC is a tamper-resistant circuit configured not to cause an erroneous operation and leakage of internal data when the circuit is attacked from the outside (attacks by illegitimate reading of the internal data and setting an input frequency and input voltage to be out of predetermined ranges).

FIG. 7 is a view of the configuration of the security chip SC shown in FIG. 5.

As shown in FIG. 7, the security chip SC includes, for example, an input/output circuit (I/O) 51, a key generation circuit 52, a hash circuit 53, a random number generation circuit 54, a signature/encoding circuit 55, a memory 56 a processor 57 connected via a data line 50.

The input/output circuit 51 is connected to the data line 40 shown in FIG. 5 and performs data input/output between inside and outside the security chip SC.

The key generation circuit 52 generates a variety of key data relating to security, for example, based on random numbers generated by the random number generation circuit 54.

The hash circuit 53 generates hash data.

The random number generation circuit 54 generates random numbers.

The signature/encoding circuit 55 encodes and decodes by using key data and performs generation of encoded data, decoding of encoded data, generation of signature data and verification of signature data.

The memory 56 stores a program PRG_SG and private key data Kpri-sc1 of the security chip SC.

Also, the memory 56 stores verification data of boot program VBP and hash data P3P-hash generated at the time of booting the server apparatus S1.

The processor 57 collectively controls an operation of the security chip SC by following control by the CPU 45 shown in FIG. 5.

Below, processing executed by the security chip SC shown in FIG. 7 when the server apparatus S1 is booted will be explained.

FIG. 8 is a flowchart for explaining the processing.

The processing shown in FIG. 8 is performed by the processor 57 shown in FIG. 7 by following control by the CPU 45 shown in FIG. 5, and control of the CPU 45 is performed by following the program PRG-S.

Step ST11:

The CPU 45 shown in FIG. 5 determines whether the server apparatus S1 is booted or not and, when it is determined to be booted, proceeds to the step ST12.

Step ST12:

The CPU 45 reads the program BIOS, loader program "Loader" and operating system OS successively from the memory 43 and executes (boots).

Continuously, the CPU 45 reads the application program P3P-AP from the memory 43, boots the same, and realizes the software environment shown in FIG. 6.

Step ST13:

The processor 57 makes the hash circuit 53 to generate hash data of the program BIOS, loader program "Loader" and operating system OS and generates verification data of boot program VBP stored in a predetermined bit field.
Also, the processor 57 makes the hash circuit 53 to generate hash data P3P-hash of the application program P3P-AP booted in the step ST11.

Step ST14:

The processor 57 writes the verification data of boot program VBP and hash data P3P-hash generated in the step ST13 in the memory 56.
Below, an operation example of the case of transmitting private data PRID from the client apparatus C to the server apparatus S1 shown in FIG. 1 will be explained.
FIG. 9 is a flowchart for explaining the operation example.
Below, the respective steps shown in FIG. 9 will be explained.
Note that in the present embodiment, it is assumed that the server apparatus S1 is already booted and the processing shown in FIG. 8 is completed.
Also, the processing of the client apparatus C shown in FIG. 9 is controlling by the CPU 34 by following the user agent program shown in FIG. 3 and processing of the server apparatus S1 shown in FIG. 9 is controlling by the CPU 34 by following the program PRG-S shown in FIG. 5.

Step ST31:

The operation portion 31 of the client apparatus C shown in FIG. 3 is operated by the user, and a platform verification request is transmitted to the server apparatus S1 via the interface 32 by following control by the CPU 34.
As a result, the procedure proceeds to processing in a step ST32.

Step ST32:

The signature/encoding circuit 55 of the security chip SC of the server apparatus S1 shown in FIG. 5 and FIG. 7 reads the verification data of boot program VBP and hash data P3P-hash generated based on the processing shown in FIG. 8 and private key data Kpri-sc1 from the memory 56 and generates data VF regulated by the formula (1) below.
In the formula (1), "∥" means combining.
Namely, the signature/encoding circuit 55 encodes a result of combining the verification data of boot program VBP and hash data P3P-hash by the private key data Kpri-sc1 to generate data VF.

$$VF = Epk\ (Kpri\text{-}sc1,\ VBP\|P3P\text{-}hash) \tag{1}$$

The signature/encoding circuit 55 writes the generated data VF in the memory 56 shown in FIG. 7.

Step ST33:

The CPU 45 shown in FIG. 5 reads the data VF stored in the memory 56 in the step ST32 from the security chip SC and transmits the same to the client apparatus C via the interface 42.
The client apparatus C shown in FIG. 3 receives the data VF from the interface 32.

Step ST34:

The CPU 34 of the client apparatus C shown in FIG. 5 decodes the data "VBP∥P3P - hash" included in the VF data received in the step ST33 by using public key data Kpub-sc1 in the public key certification data Cert-sc1 read from the memory 33.
The CPU 34 compares the verification data of boot program VBP in the decoded data "VBP∥P3P - hash" with the reference verification data of boot program R-VBP read from the memory 33 and compares the hash data P3P-hash with the reference hash data R-P3P-hash read from the memory 33 to verify whether the both are matched or not.

The CPU 34 determines the data VF is valid when the both are matched, while determines invalid when not matched.

The CPU 34 proceeds to a step ST35 on condition of determining the both are matched.

As a result that the CPU 34 performs the above verification in the step ST34, the client apparatus c can determine whether or not the server apparatus S1 has a software environment capable of protecting the user's own private data PRID.

Step ST35:

Negotiation regarding transmission of private data PRID by the client apparatus C is made between the client apparatus C and the server apparatus S1.

Specifically, the CPU 45 of the server apparatus S1 shown in FIG. 5 transmits the privacy policy data POL read from the memory 43 to the client apparatus C via the interface 42.

The CPU 34 of the client apparatus C shown in FIG. 3 compares preference data PRF read from the memory 33 with the received privacy policy data POL and determines whether or not the server apparatus S1 declares to use the private data PRID in a form required by the user of the client apparatus C.

Then, the CPU 34 proceeds to a step ST36 after determining whether or not the server apparatus S1 declares to use the private data PRID in a form required by the user of the client apparatus C.

Step ST36:

The CPU 34 shown in FIG. 4 encodes based on a predetermined key data K the data "VBP‖P3P-hash‖PRID" obtained by combining the data "VBP‖P3P-hash" decoded in the step ST34 and the private data PRID read from the memory 33 so as to generate encoded data Esk(K,VBP‖P3P-hash‖PRID).

Also, the CPU 34 encodes the key data K based on the public key data Kpub-sc1 of the security chip SC of the server apparatus S1 to generate encoded data Epk(Kpub-sc1, K).

Then, the CPU 34 combines the encoded Epk(Kpub-sc1, K) and the encoded data Esk(K,VBP‖P3P-hash‖PRID) to generate data COD expressed by the formula (2) below.

$$COD = Epk(Kpub\text{-}sc1,K) \,\|Esk(K,VBP\|P3P\text{-}hash\|PRID) \tag{2}$$

Step ST37:

The CPU 34 of the client apparatus C shown in FIG. 3 transmits the data COD generated in the step ST36 to the server apparatus S1 via the interface 32.

The interface 42 of the server apparatus S1 shown in FIG. 5 receives the data COD.

Step ST38:

The processor 57 shown in FIG. 7 of the security chip SC of the server apparatus S1 shown in FIG. 5 decodes the encoded key data K included in the data COD received in the step ST37 based on the private key data Kpri-sc1 read from the memory 56.

Step ST39:

The processor 57 decodes the encoded data "VBP‖P3P-hash‖PRID" included in the data COD by using the key data K decoded in the step ST38.

Step ST40:

The processor 57 compares the verification data of boot program VBP decoded in the step ST39 with the verification data of boot program VBP written in the memory 56 in the step ST32, compares the hash data P3P-hash decoded in the step ST39 with the hash data P3P-hash written in the memory 56 in the step ST32, verifies whether the both are matched or not, determines they are valid when determined to be matched, and proceeds to a step ST41.

Note that in the case where, during a time from boot of the server apparatus S1 immediately before the step ST32 until execution of the step ST40, any one of the program BIOS, loader program "Loader", operating system and application program P3P-AP is restarted with a different content from that immediately before that on the server apparatus S1; at the time of executing the step ST40, at least one of the verification data of boot program VBP and hash data P3P-hash stored in the memory 56 becomes different from corresponding data in the data VF generated in the step ST32.

Accordingly, by verifying as above in the processor 57, it is possible to guarantee that the software environment of the server apparatus S1 verified by the client apparatus C in the step ST34 is maintained until the client apparatus C transmits private data PRID to the server apparatus S1 in the step ST37.

Step ST41:

The signature/encoding circuit 55 shown in FIG. 7 of the server apparatus S1 decodes the private data PRID included in the data COD received in the step ST37 based on the key data K decoded in the step ST38.

Step ST42:

The CPU 45 of the server apparatus S1 shown in FIG. 5 performs processing of using the private data PRID decoded in the step ST 41 by following the privacy policy data POL based on the application program P3P-AP.
As explained above, according to the communication system 1, due to the processing in the steps ST32, ST33 and ST34 shown in FIG. 9, the client apparatus C is capable of verifying a software environment of the server apparatus S1 without using a TTP server apparatus. Therefore, a processing load on the client apparatus c and the server apparatus S1 can be reduced comparing with that in the case of the related art.
Also, according to the communication system 1, as explained by using FIG. 9, as a result that the client apparatus C transmits the data COD expressed by the above formula (2) in the step ST37 to the server apparatus S1 and that the security chip SC of the server apparatus S1 verifies the verification data of boot program VBP and hash data P3P-hash in the step ST60, it is possible to guarantee that the software environment of the server apparatus S1 verified by the client in the step ST34 is maintained until the client apparatus C transmits private data PRID to the server apparatus S1 in the step ST37.
Namely, it is possible to effectively prevent the software environment of the server apparatus S1 from being changed to what incapable of protecting the private data PRID and prevent the private data PRID from being improperly used.
Also, according to the communication system 1, the processing in the steps ST32 and ST38 to ST41 is performed in a security chip SC being a tamper-resistant circuit, so that it is highly reliable.

Second Embodiment

In the present embodiment, the processing in the steps ST38 to ST41 shown in FIG. 9 is executed not by the security chip shown in FIG. 5 but by the CPU 45 based on the operating system OS.
Below, in the present embodiment, an operation example of the case of transmitting private data PRID from the client apparatus C shown in FIG. 1 to the server apparatus S1 will be explained.

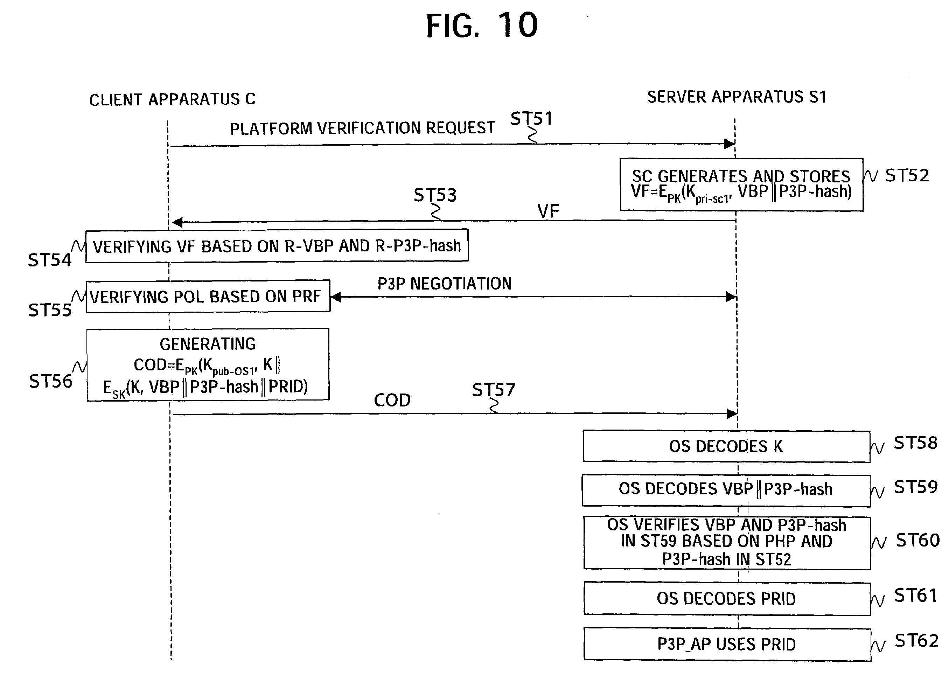

FIG. 10 is a flowchart for explaining the operation example.
Below, the respective steps shown in FIG. 10 will be explained.
Note that in the present embodiment, it is assumed that the server apparatus S1 is already booted and processing shown in FIG. 8 is completed.
Steps ST51 to ST55 and ST62 shown in FIG. 10 are the same as steps ST31 to ST35 and ST42 shown in FIG. 9, respectively.
Also, the step ST56 shown in FIG. 10 is the same as the step ST36 shown in FIG. 9 except that the key data K is encoded by using the public key data Kpub-os1 of the operating system OS of the server apparatus S1.
Also, the step ST58 shown in FIG. 10 is the same as the step ST38 shown in FIG. 9 except for being executed by the operating system OS and that the key data K is decoded by using the private key data Kpri-os1 of the operating system OS of the server apparatus S1.
Also, the steps ST59 to ST61 shown in FIG. 10 are respectively the same as the steps ST 39 to ST 41 shown in FIG. 9 except for being executed by the operating system OS.
The same effect is obtained as that in the first embodiment.

Third Embodiment

In the present embodiment, the case of transmitting private data POL from the server apparatus S1 shown in FIG. 1 to the client apparatus C will be explained.

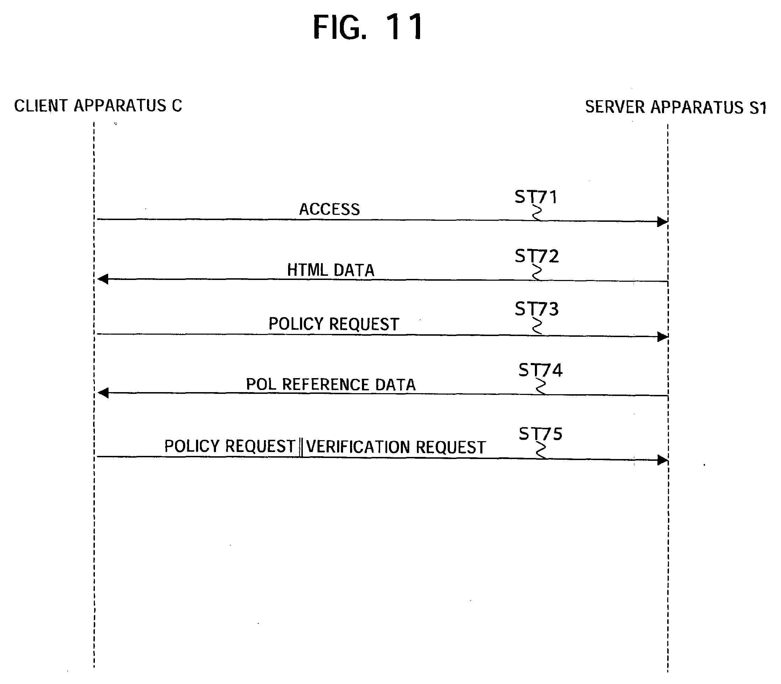

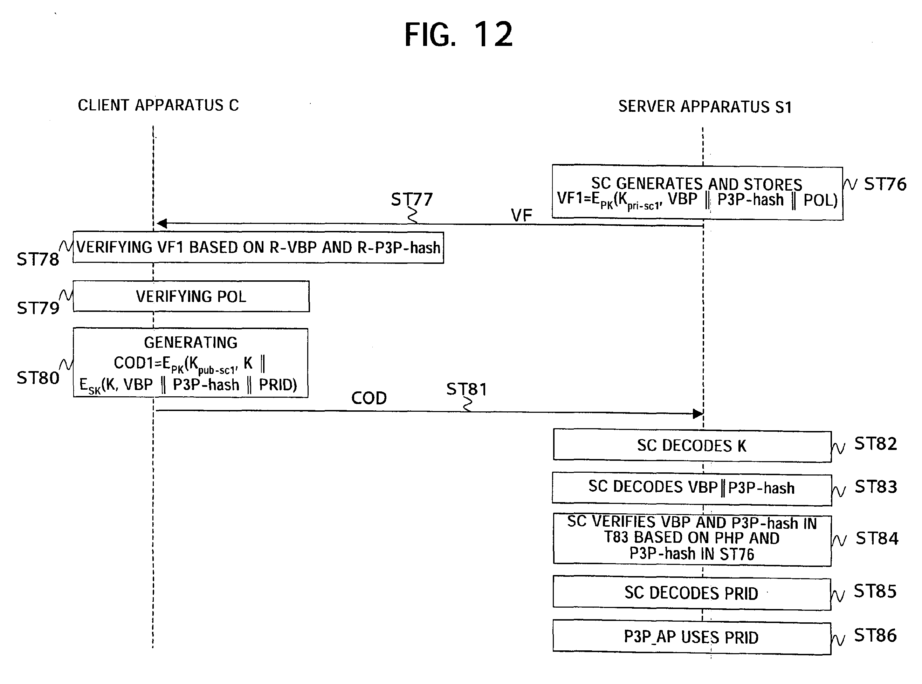

FIG. 11 and FIG. 12 are flowcharts for explaining an operation example of a communication system in a third embodiment of the present invention.

The communication system of the present embodiment is the same as the communication system explained in the first embodiment except for an operation explained below.

Below, the respective steps shown in FIG. 11 and FIG, 12 will be explained.

Note that in the present embodiment, it is assumed that the server apparatus S1 is already booted and the processing shown in FIG. 8 is completed.

Also, processing of the client apparatus C shown in FIG. 11 and FIG. 12 is controlled by the CPU 34 by following the user agent program U_AG shown in FIG. 3, and processing of the server apparatus S1 shown in FIG. 11 and FIG. 12 is controlled by the CPU 45 by following the program PRG-S shown in FIG. 5.

Step ST71:

The operation portion 31 of the client apparatus C shown in FIG. 3 is operated by the user and an access is made to the server apparatus S1 by following control by the CPU 34 based on a URL (Uniform Resource Locator) specified by the operation.

Step ST72:

The server apparatus S1 transmits predetermined HTML (Hypertext Markup Language) data to the client apparatus C in response to the access in the step ST71.

The CPU 34 of the client apparatus C performs processing on the HTML data and makes a not shown display to display a screen in accordance therewith.

In the present embodiment, the HTML data is, for example, guide data of member registration to a predetermined organization.

Step ST73:

The operation portion 31 of the client apparatus C shown in FIG. 3 is operated by a user watching the screen and a policy request is transmitted to the server apparatus S1 by following control by the CPU 34.

Step ST74:

The server apparatus S1 transmits POL reference data to the client apparatus C in response to the policy request received in the step ST73.

Here, the POL reference data (policy reference file) indicates an address where P3P policy regarding HTML exists.

Step ST75:

The operation portion 31 of the client apparatus C shown in FIG. 3 is operated by the user and a policy request and verification request are transmitted to the server apparatus S1 by following control by the CPU 34.

Step ST76:

The signature/encoding circuit 55 of the security chip SC of the server apparatus S1 shown in FIG. 5 and FIG. 7 reads verification data of boot program VBP, hash data P3P-hash, privacy policy data POL and private key data Kpri-sc1 from the memory 56 based on the processing in FIG. 8 and generates data VF regulated by the formula (3) below.

In the formula (3), "∥" indicates combining.

Namely, the signature/encoding circuit 55 encodes a result of combining the verification data of boot program VBP, hash data P3P-hash and privacy policy data by using POL and private key data Kpri-sc1 to generate data VF1.

$$VF1 = Epk(Kpri\text{-}sc1, VBP\|P3P\text{-}hash\|POL) \tag{3}$$

The signature/encoding circuit 55 writes the generated data VF1 to the memory 56 shown in FIG. 7.

Step ST77:

The CPU 45 shown in FIG. 5 reads data VF1 stored in the memory 56 in the step ST76 from the security chip SC and transmits the same to the client apparatus C via the interface 42.

The client apparatus C shown in FIG. 3 receives the data VF1 by the interface 32.

Step ST78:

The CPU 34 of the client apparatus shown in FIG. 5 decodes data "VBP‖P3P-hash‖POL" included in the data VF1 received in the step ST77 by using the public key data Kpub-sc1 in the public key certification data Cert-sc1 read from the memory 33.

The CPU 34 compares the verification data of boot program VBP in the decoded data "VBP‖P3P-hash‖POL" with reference verification data of boot program R-VBP read from the memory 33 and compares the hash data P3P-hash with reference hash data R-P3P-hash read from the memory 33 to verify whether the both are matched or not.

The CPU 34 determines that the data VF1 is valid when the both are matched and determines invalid when not matched.

The CPU 34 proceeds to the step ST79 on condition that the both are determined to be matched.

As a result that the CPU 34 verifies as above in the step ST78, the client apparatus C can determine whether the server apparatus S1 is provided with a software environment capable of protecting the user's own private data PRID or not.

Step ST79:

On condition that the privacy policy data POL decoded in the step ST78 matches with, for example, the P3P policy obtained based on the POL reference data obtained in the above step ST74 and is obtained from the proper server apparatus S1 to which the policy request was given in the step ST75, the CPU 34 proceeds to a step ST80.

Step ST80:

The CPU 34 shown in FIG. 4 encodes data "VBP‖P3P-hash‖PRID" obtained by combining the data "VBP‖P3P-hash‖POL" decoded in the step ST78 and private data PRID read from the memory 33 based on predetermined key data K to generate encoded data Esk(K, VBP‖P3P-hash‖PRID).

Also, the CPU 34 encodes the key data K based on the public key data Kpub-sc1 of the security chip SC of the server apparatus S1 to generate encoded data Epk(Kpub-sc1, K).

The CPU 34 combines the encoded data Epk(Kpub-sc1, K) and the encoded data Esk(K, VBP‖P3P-hash‖PRID) to generate the data COD expressed by the formula (2) above.

Steps ST81 to ST86:

Processing in the steps ST81 to ST86 shown in FIG. 12 is the same as that in the steps ST37 to ST42 explained by using FIG. 9.

As explained above, according to the present embodiment, in addition to the effects of the first embodiment explained above, effects below can be obtained.

Namely, according to the present embodiment, the security chip SC of the server apparatus S1 encodes the privacy policy data POL based on the private key data Kpri-sc1 in the step ST 76 shown in FIG. 12, and the client apparatus C decodes the same based on the public key data Kpub-sc1 in the step ST78. Then, the client apparatus C verifies the decoded privacy policy data POL.

As a result, the client apparatus C can verify that the server apparatus S1 provided with a software environment capable of protecting the private data PRID verified in the step ST78 is identical with the server apparatus S1 having the privacy policy data POL.

Therefore, so-called impersonation by the server apparatus S1 can be effectively prevented.

Fourth Embodiment

In the present embodiment, the case of selecting privacy policy data POL desired by the client apparatus C among a plurality of privacy policy data POL regulated by the server apparatus S1 will be explained.

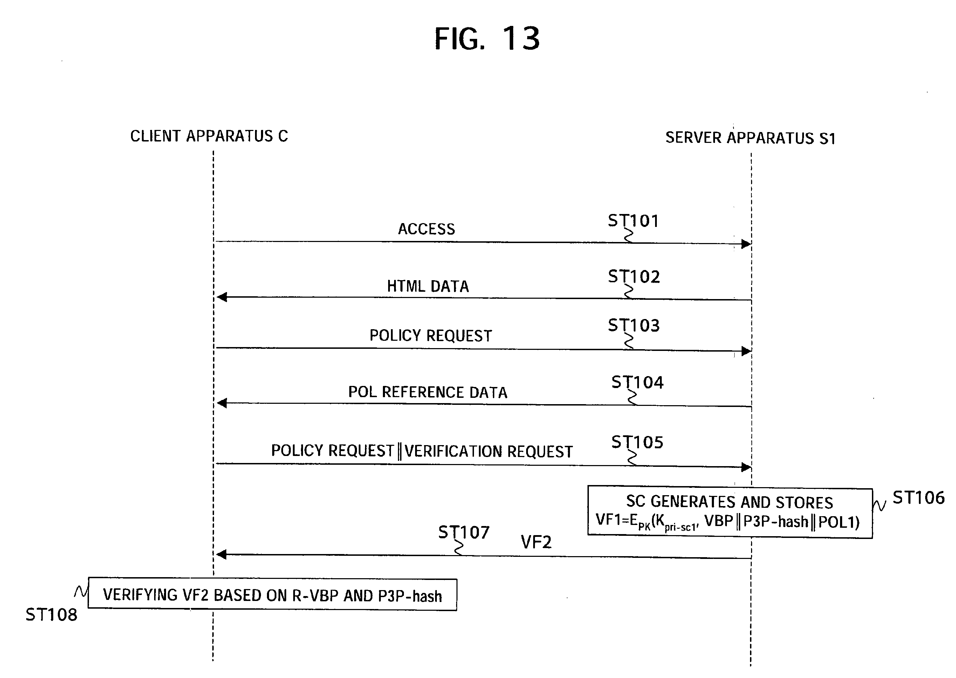

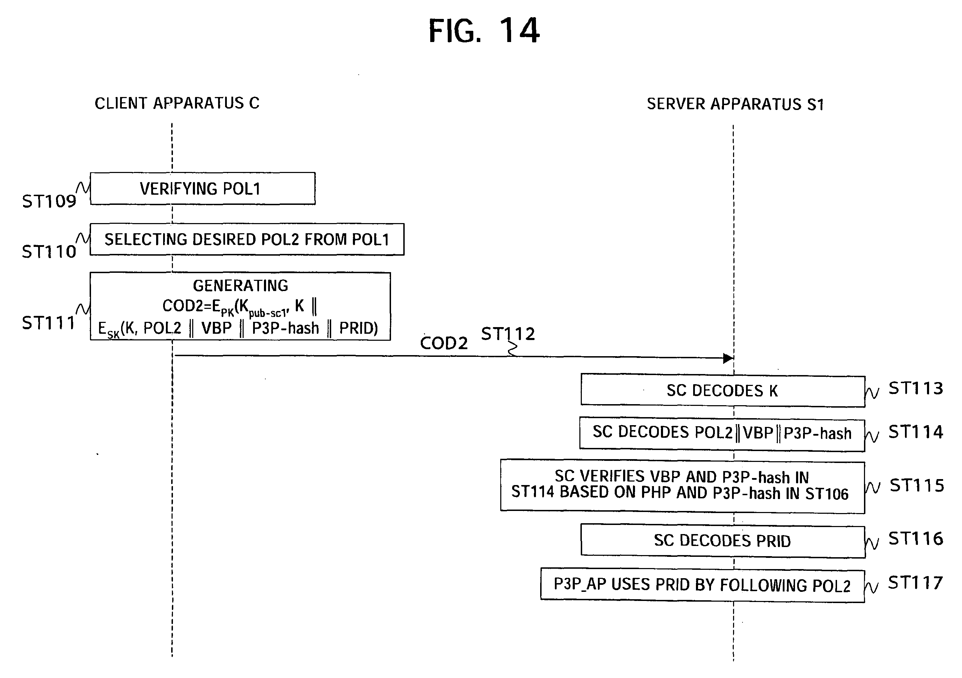

FIG. 13 and FIG. 14 are flowcharts for explaining an operation of a communication system according to the fourth embodiment of the present invention.

The communication system of the present embodiment is the same as that explained in the first and third embodiments except for an operation explained below.

Below, respective steps shown in FIG. 13 and FIG. 14 will be explained.

Note that in the present embodiment, it is assumed that the server apparatus S1 is booted and processing shown in FIG. 8 is completed.

Also, processing by the client apparatus C shown in FIG. 13 and FIG. 14 is controlled by the CPU 34 by following the user agent program U_AG, and processing by the server apparatus S1 shown in FIG. 13 and FIG. 14 is controlled by the CPU 45 by following the program PRG-S shown in FIG. 5.

Step ST101:

The operation portion 31 of the client apparatus C shown in FIG. 3 is operated by the user, and an access to the server apparatus S1 is made by control by the CPU 34 based on a URL specified by the operation.

Step ST102:

The server apparatus S1 transmits predetermined HTML data to the client apparatus C in response to the access made in the step ST71 (ST101).

The client apparatus C performs processing on the HTML data in the CPU 34 and displays a screen in accordance with that on a not shown display.

In the present embodiment, the HTML data is guide data, for example, regarding member registration to a predetermined organization.

Step ST103:

The user watching the screen operates the operation portion of the client apparatus C shown in FIG. 3, and a policy request is transmitted to the server apparatus S1 by following control by the CPU 34.

Step ST104:

The server apparatus S1 transmits POL reference data to the client apparatus C in response to the policy request received in the step ST103.

The client apparatus C confirms the content by retrieving P3P policy based on the POL reference data.

At this time, in the present embodiment, the server apparatus S1 regulates a plurality of privacy policy data POL2 and select privacy policy data POL2 desired by the user of the client apparatus C among them.

Step ST105:

The user operates the operation portion 31 of the client apparatus C shown in FIG. 3, and a policy request and a verification request are transmitted to the server apparatus S1 by following control by the CPU 34.

Step ST106:

The signature/encoding circuit 55 of the security chip SC of the server apparatus S1 shown in FIG. 5 and FIG. 7 reads verification data of boot program VBP generated based on the processing in FIG. 8, hash data P3P-hash, privacy policy data POL1 and private key data Kpri-sc1 from the memory 56 and generates data VF regulated by the formula (4) below.

In the formula (4), "‖" means combining.

Namely, the signature/encoding circuit 55 generates data VF2 by encoding a result of combining the verification data of boot program VBP, hash data P3P-hash, and privacy policy data POL1 by using the private key data Kpri-sc1.

In the present embodiment, the privacy policy data POL1 includes a plurality of privacy policy data POL2 having different content.

$$VF1 = Epk(Kpri\text{-}sc1, VBP‖P3P\text{-}hash‖POL1) \tag{4}$$

The signature/encoding circuit 55 writes the generated data VF2 to the memory 56 shown in FIG. 7.

Step ST107:

The CPU 45 shown in FIG. 5 reads the data VF2 stored in the memory 56 in the step ST106 from the security chip SC and transmits the same to the client apparatus C via the interface 42.

The client apparatus C shown in FIG. 3 receives the data VF2 by the interface 32.

Step ST108:

The CPU 34 of the client apparatus C shown in FIG. 5 decodes the data "VBP‖P3P-hash‖POL1" included in the data VF2 received in the step ST107 by using public key data Kpub-sc1 in public key certification data Cert-sc1 read from the memory 33.

Then, the CPU 34 compares the verification data of boot program VBP in the decoded data "VBP‖P3P-hash‖POL1" with reference verification data of boot program R-VBP read from the memory 33, and compares the hash data P3P-hash with reference hash data R-P3P-hash read from the memory 33 to verify whether the both are matched.

The CPU 34 determines the data VF2 is valid when the both are matched, while not, determines that the data VF2 is invalid.

The CPU 34 proceeds to a step ST109 on condition that the both are determined to be matched.

As a result that the CPU 34 performs the verification in the step ST 109, the client apparatus C can determine whether the server apparatus S1 is provided with a software environment capable of protecting the user's own private data PRID.

Step ST109:

The CPU 34 proceeds to the step ST110 on condition that the privacy policy data POL1 decoded in the step ST108 matches with the P3P policy obtained in the step ST104 explained above, and that it is by the appropriate server apparatus S1 which sent the policy request in the step ST105.

Step ST110:

The CPU 34 prompts the user to select desired privacy policy data POL2 from the plurality of privacy policy data POL2 included in the privacy policy data POL1.

Note that the CPU 34 may automatically select the privacy policy data POL2 based on user profile data PRF read from the memory 33.

Step ST111:

The CPU 34 shown in FIG. 4 generates encoded data Esk(K, POL2‖VBP‖P3P-hash‖PRID) by encoding data "POL2‖VBP‖P3P-hash‖PRID" obtained by combining the data "VBP‖P3P-hash" decoded in the step ST108, the privacy policy data POL2 selected in the step ST110 and the private data PRID read from the memory 33 based on predetermined key data K.

Also, the CPU 34 encodes the key data K based on the public key data Kpub-sc1 of the security chip SC of the server apparatus S1 to generate encoded data Epk(Kpub-sc1, K).

Then, the CPU 34 combines the encoded data Epk(Kpub-sc1, K) and the encoded data Esk(K, POL2‖VBP‖P3P-hash‖PRID) to generate data COD2 expressed by the formula (5) below.

$$COD2 = Epk\,(Kpub\text{-}sc1,\ K)\,\|Esk\,(K,\ POL2\|VBP\|P3P\text{-}hash\|PRID) \qquad (5)$$

Step ST112:

The CPU 34 of the client apparatus C shown in FIG. 3 transmits the data COD2 generated in the step ST111 to the server apparatus S1 via the interface 32.

The interface 42 of the server apparatus S1 receives the data COD2.

Step ST113:

The processor 57 shown in FIG. 7 of the security chip SC of the server apparatus S1 shown in FIG. 5 decodes the encoded key data K included in the data COD2 received in the step ST112 based on the private key data Kpri-sc1 read from the memory 56.

Step ST114:

The processor 57 decodes the encoded data "POL2‖VBP‖P3P-hash" included in the data COD2 by using the key data K decoded in the step ST113.

Step ST115:

The processor 57 compares the verification data of boot program VBP decoded in the step ST114 with verification data of boot program VBP written to the memory 56 in the step ST106, and compares the hash data P3P-hash decoded in the step ST114 with hash data P3P-hash written to the memory 56 in the step ST106 to verify whether the both are matched and, when determined they are matched, determines the validity to proceed to a step ST116.

Step ST116:

The signature/encoding circuit 55 shown in FIG. 7 of the server apparatus S1 decodes the private data PRID included in the data COD2 received in the step ST112 based on the key data K decoded in the step ST113.

Step ST117:

The CPU 45 of the server apparatus S1 shown in FIG. 5 performs processing of using the private data PRID decoded in the step ST116 by following the privacy policy data POL2 (the privacy policy data selected by the user of the client apparatus C) decoded in the step ST114 based on the application program P3P-AP.
As explained above, according to the present embodiment, in addition to the effects of the communication system of the third embodiment, an effect is obtained that the privacy policy data POL2 desired by the user of the client apparatus C can be selected from a plurality of privacy policy data POL1 regulated by the server apparatus S1.

Fifth Embodiment

In the present embodiment, the case where the server apparatus S1 transmits private data PRID of the user of the client apparatus C to a server apparatus S2 in response to a request by the client apparatus C.

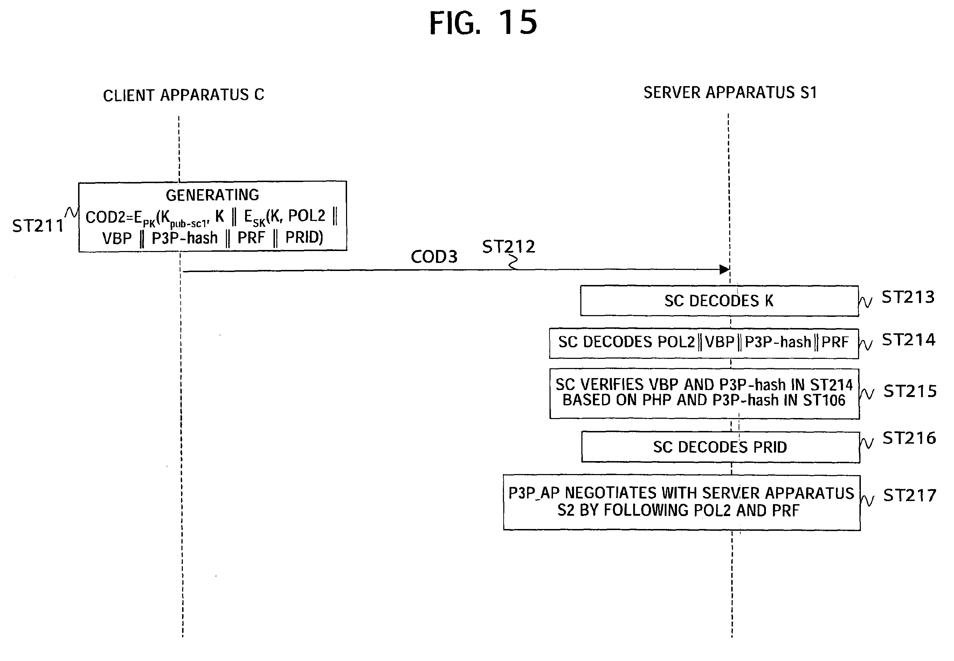

FIG. 15 is a flowchart for explaining an operation example of a communication system in the fifth embodiment of the present invention.
The communication system of the present embodiment is the same as that explained in the first, third and fourth embodiments except for operations below.
Below, respective steps shown in FIG. 15 will be explained.
Note that in the present embodiment, it is assumed that the server apparatus S1 is already booted and processing shown in FIG. 8 is completed.
Also, before a step ST211 shown in FIG. 15, the steps ST101 to ST110 explained in the fourth embodiment by using FIG. 13 and FIG. 14 are finished.
Also, processing of the client apparatus C shown in FIG. 15 is controlled by the CPU 34 by following the user agent program U_AG shown in FIG. 3, and processing of the server apparatus S1 shown in FIG. 15 is controlled by the CPU 45 by following a program PRG-S shown in FIG. 5.

Step ST211:

The CPU 34 shown in FIG. 4 generates encoded data Esk(K, POL2‖VBP‖P3P-hash‖PRFP‖PRID) by encoding data "POL2‖VBP‖P3P-hash‖PRFP‖PRID" obtained by combining the data "VBP‖P3P-hash" decoded in the step ST108, the privacy policy data POL2 selected in the step ST110, user profile data PRF read from the memory 33 and the private data PRID read from the memory 33 by using predetermined key data K.
Also, the CPU 34 encodes the key data K based on the public key data Kpub-sc1 of the security chip SC of the server apparatus S1 to generate encoded data Epk(Kpub-sc1, K).
Then, the CPU 34 combines the encoded data Epk(Kpub-sc1, K) and the encoded data Esk(K, POL2‖VBP‖P3P-hash‖PRFP‖PRID) to generate data COD3 expressed by the formula (6) below.

$$COD3 = Epk\ (Kpub\text{-}sc1,\ K)\ ‖Esk\ (K,\ POL2‖VBP‖P3P\text{-}hash‖PRFP‖PRID) \qquad (6)$$

Step ST212:

The CPU 34 of the client apparatus C shown in FIG. 3 transmits the data COD3 generated in the step ST211 to the server apparatus S1 via the interface 32.
The interface 42 of the server apparatus S1 shown in FIG. 5 receives the data COD3.

Step ST213:

The processor 57 shown in FIG. 7 of the security chip SC of the server apparatus S1 shown in FIG. 5 decodes the encoded key data K included in the data COD3 received in the step ST212 based on the private key data Kpri-sc1 read from the memory 56.

Step ST214:

The processor 57 decodes the encoded data "POL2‖VBP‖P3P-hash‖PRF" included in the data COD3 by using the key data K decoded in the step ST213.

Step ST215:

The processor 57 compares the verification data of boot program VBP decoded in the step ST214 with verification data of boot program VBP written to the memory 56 in the step ST106 shown in FIG. 13, and compares the hash data P3P-hash decoded in the step ST214 with hash data P3P-hash written to the memory 56 in the step ST106 shown in FIG. 13 to verify whether the both are matched and, when determined they are matched, determines the validity to proceed to a step ST116.

Step ST216:

The signature/encoding circuit 55 shown in FIG. 7 of the server apparatus S1 decodes the private data PRID included in the data COD3 received in the step ST212 based on the key data K decoded in the step ST213.

Step ST217:

The CPU 45 of the server apparatus S1 shown in FIG. 5 performs the P3P negotiation processing explained in the first embodiment with the server apparatus S2 by using the steps ST31, ST34, ST35 and ST36 shown in FIG. 9 by following the privacy policy data POL2 (the privacy policy data selected by the user of the client apparatus C) decoded in the step ST214 based on the application program P3P-AP.
In this case, the server apparatus S2 performs processing in the steps ST32 and ST38 to ST42 shown in FIG. 9.
As explained above, according to the present embodiment, the client apparatus C is capable of requesting the server apparatus S1 to negotiate with the server apparatus S2 about transmission of the private data PRID of the user of the client apparatus C.
Therefore, in the case where the client apparatus C transmits private data PRID to both of the server apparatuses S1 and S2, a load of processing on the client apparatus C and a load of operating on the user of the client apparatus C can be reduced.
Also, according to the present embodiment, since the client apparatus C verifies a software environment of the server apparatus S1 and the server apparatus S1 negotiates with the server apparatus S2 by following the privacy policy data POL2 and the user profile data PRF, it is possible to make the server apparatus S2 to appropriately protect the private data PRID with high reliability.

Sixth Embodiment

The case where the client apparatus C requests canceling of already transmitted private data PRID to the server apparatus S1 in the above fifth embodiment will be explained.

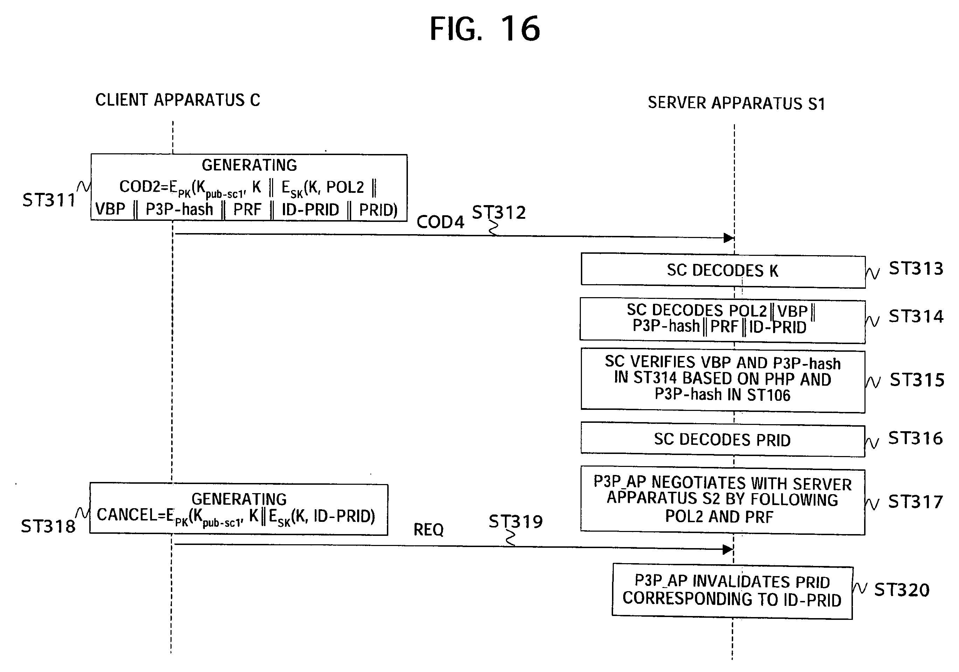

FIG. 16 is a flowchart for explaining an operation example of the communication system in the fifth embodiment of the present invention.

The communication system of the present embodiment is the same as that explained in the first and third to fifth embodiments except for operations to be explained below.

Below, respective steps shown in FIG. 16 will be explained.

Note that in the present embodiment, it is assumed that the server apparatus S1 is already booted and processing shown in FIG. 8 is completed.

Also, before a step ST311 shown in FIG. 16, the steps ST101 to ST110 explained in the fourth embodiment by using FIG. 13 and FIG. 14 are finished.

Also, processing of the client apparatus C shown in FIG. 16 is controlled by the CPU 34 by following the user agent program U_AG shown in FIG. 3, and processing of the server apparatus S1 shown in FIG. 16 is controlled by the CPU 45 by following a program PRG-S shown in FIG. 5.

Step ST311:

The CPU 34 shown in FIG. 4 generates encoded data Esk(K, POL2‖VBP‖P3P-hash‖PRFP‖ID-PRID‖PRID) by encoding data "POL2‖VBP‖P3P-hash‖PRFP‖ID-PRID‖PRID" obtained by combining the data "VBP‖P3P-hash" decoded in the step ST108 shown in FIG. 13, the privacy policy data POL2 selected in the step ST110, user profile data PRF read from the memory 33, identification data ID-PRID of the private data PRID and the private data PRID by using predetermined key data K.

Also, the CPU 34 encodes the key data K based on the public key data Kpub-sc1 of the security chip SC of the server apparatus S1 to generate encoded data Epk(Kpub-sc1, K).

Then, the CPU 34 combines the encoded data Epk(Kpub-sc1, K) and the encoded data Esk(K, POL2‖VBP‖P3P-hash‖PRFP‖ID-PRID‖PRID) to generate data COD4 expressed by the formula (7) below.

$$COD4 = Epk\,(Kpub\text{-}sc1,\,K)\,\|Esk\,(K,\,POL2\|VBP\|P3P\text{-}$$

$$hash\|PRFP\|ID\text{-}PRID\|PRID) \tag{7}$$

Step ST312:

The CPU 34 of the client apparatus C shown in FIG. 3 transmits the data COD4 generated in the step ST311 to the server apparatus S1 via the interface 32.

The interface 42 of the server apparatus S1 shown in FIG. 5 receives the data COD4.

Step ST313:

The processor 57 shown in FIG. 7 of the security chip SC of the server apparatus S1 shown in FIG. 5 decodes the encoded key data K included in the data COD4 received in the step ST312 based on the private key data Kpri-sc1 read from the memory 56.

Step ST314:

The processor 57 decodes the encoded data "POL2‖VBP‖P3P-hash‖PRF‖ID-PRID" included in the data COD4 by using the key data K decoded in the step ST313.

Step ST315:

The processor 57 compares the verification data of boot program VBP decoded in the step ST314 with verification data of boot program VBP written to the memory 56 in the step ST106 shown in FIG. 13, and compares the hash data P3P-hash decoded in the step ST314 with hash data P3P-hash written to the memory 56 in the step ST106 shown in FIG. 13 to verify whether the both are matched and, when determined that they are matched, determines the validity and proceeds to a step ST316.

Step ST316:

The signature/encoding circuit 55 shown in FIG. 7 of the server apparatus S1 decodes the private data PRID included in the data COD4 received in the step ST312 based on the key data K decoded in the step ST313.

Step ST317:

The CPU 45 of the server apparatus S1 shown in FIG. 5 performs the P3P negotiation processing explained in the first embodiment with the server apparatus S2, for example, by using the steps ST31, ST34, ST35 and ST36 shown in FIG. 9 by following the privacy policy data POL2 (the privacy policy data selected by the user of the client apparatus C) decoded in the step ST314 and the user profile data PRF based on the application program P3P-AP.
In this case, the server apparatus S2 performs processing in the steps ST32 and ST38 to ST42 shown in FIG. 9.

Step ST318:

The user operates the operation portion 31 of the client apparatus C, and the identification data ID-PRID of the private data PRID, which the user desires to cancel, is specified.
The CPU 34 shown in FIG. 4 encodes the specified identification data ID-PRID to be cancelled based on predetermined key data to generate encoded data Esk(K, ID-PRID).
Also, the CPU 34 encodes the key data K based on the public key data Kpub-sc1 of the security chip SC of the server apparatus S1 to generate encoded data Epk(Kpub-sc1, K).
The CPU 34 combines the encoded data Epk(Kpub-sc1 K) and the encoded data Esk(K, ID-PRID) to generate a cancel request expressed by the formula (8) below.

$$REQ = Epk\ (Kpub\text{-}sc1,\ K)\|Esk\ (K,\ ID\text{-}PRID) \qquad (8)$$

Step ST319:

The CPU 34 of the client apparatus C shown in FIG. 3 transmits the request REQ generated in the step ST318 to the server apparatus S1 via the interface 32.
The interface 42 of the server apparatus S1 shown in FIG. 5 receives the request REQ.
The CPU 45 of the server apparatus S1 decodes the key data K in the same way as in the step ST313 and decodes the identification data ID-PRID based on the key data K.
Then, the CPU 45 invalidates the private data PRID corresponding to the decoded ID-PRID.
Note that, in the invalidation, the private data PRID is invalidated on condition that it is before the server apparatus S1 transmits the private data PRID to other server apparatuses.
As explained above, according to the present embodiment, the client apparatus C is capable of invalidating the private data PRID transmitted to the server apparatus S1.

Seventh Embodiment

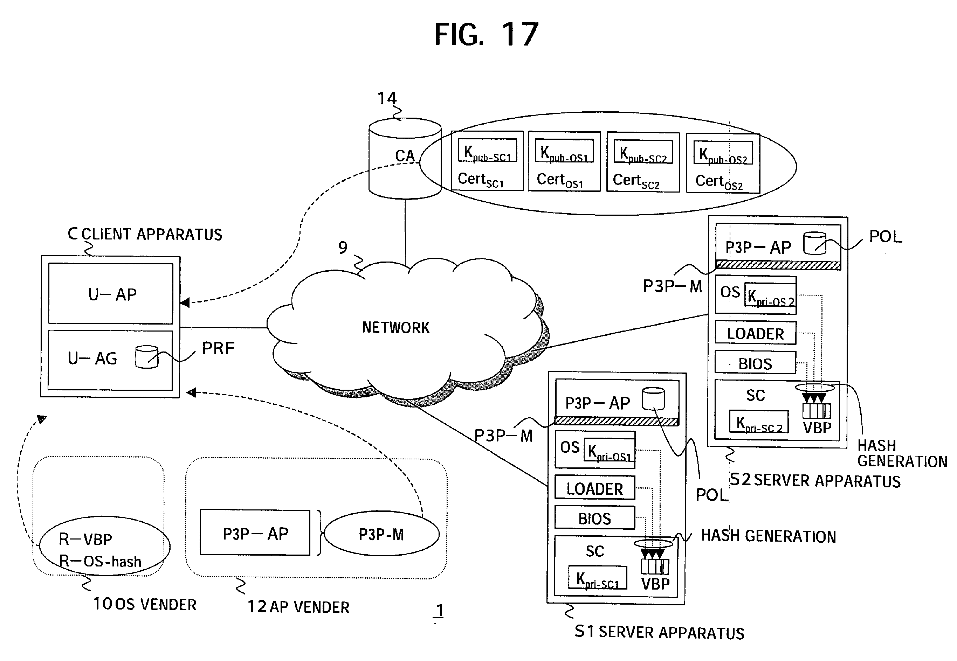

In the above embodiment, to verify an application program P3P-AP, the hash data P3P-hash was used, but instead of that, manifest data P3P-M added to the application program P3P may be used as shown in FIG. 17.
Here, the manifest data P3P-M includes, for example, hash data P3P-hash or public key data of the application program P3P-AP and signature data of the hash data P3P-hash.
Note that the manifest data P3P-M may also include data describing authority and property given to the application program P3P-AP.
The signature data is generated, for example, based on private key data of an AP vender 12 and can be verified based on public key data of the AP vender 12.
In the present embodiment, the server apparatus S1 transmits the manifest data P3P-M instead of the hash data P3P-hash.
At this time, the server apparatus S1 gets permission of transmitting the manifest data P3P-M on condition that the application program P3P-AP is booted.
The client apparatus C determines whether the application program P3P-AP is booted on the server apparatus S1 or not, for example, based on the manifest data P3P-M received from the server apparatus S1.

Eighth Embodiment

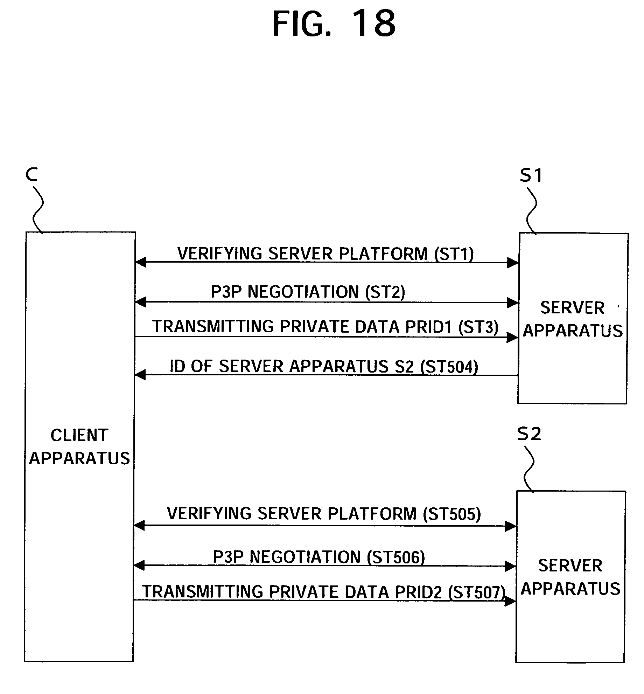

In the present embodiment, the case of transmitting the private data PRID of the client apparatus C to a plurality of server apparatuses S1 and S2 will be explained with reference to FIG. 18.

For example, as shown in FIG. 18, the client apparatus C performs the steps ST1, ST2 and ST3 explained with reference to FIG. 2 in the first embodiment and transmits the private data PRID to the server apparatus S1

After that, the server apparatus S1 transmits ID of the server apparatus S2 to the client apparatus C (step ST504).

The server apparatus S1 performs verification processing of a platform of the server apparatus S2 (ST505), P3P negotiation processing (ST506) and transmission processing of private data PRID2 (ST507) with the server apparatus S2.

Ninth Embodiment

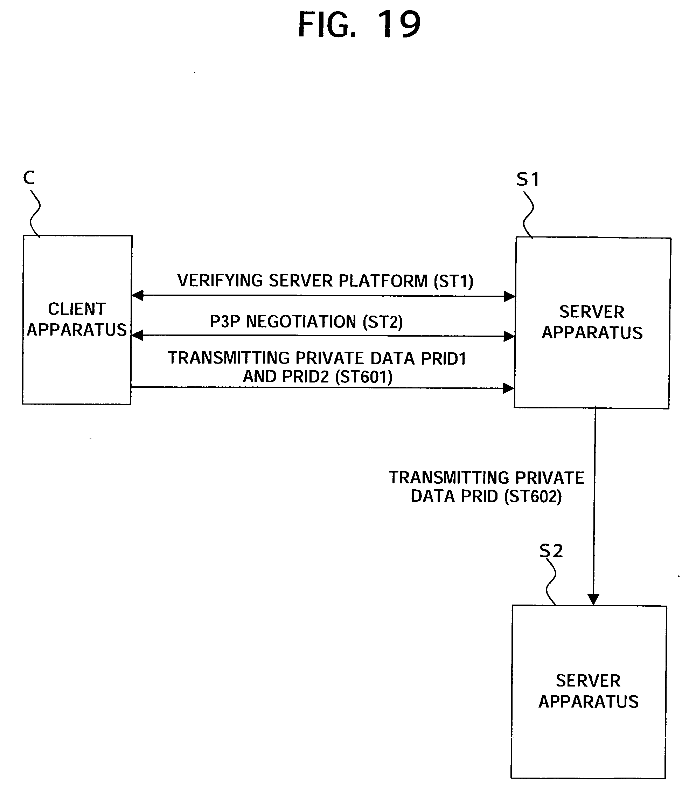

In the present embodiment, the case of transmitting the private data PRID of the client apparatus C to a plurality of server apparatuses S1 and S2 will be explained with reference to FIG. 19.

For example, as shown in FIG. 19, after performing the steps ST1 and ST2 explained with reference to FIG. 2 in the first embodiment, the client apparatus C transmits the private data PRID1 and PRID2 to the server apparatus S1 (ST601).

After that, the server apparatus S1 transmits the private data PRID2 to the server apparatus S2 (ST602).

Tenth Embodiment

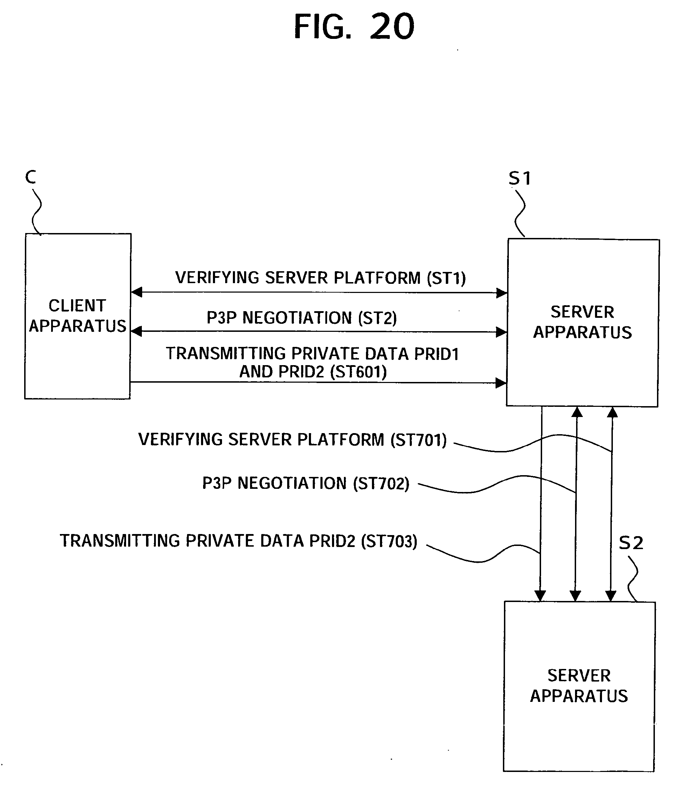

In the present embodiment, the case of transmitting the private data PRID of the client apparatus C to a plurality of server apparatuses S1 and S2 will be explained with reference to FIG. 20.

For example, as shown in FIG. 20, after performing the steps ST1 and ST2 explained with reference to FIG. 2 in the first embodiment, the client apparatus C transmits the private data PRID1 and PRID2 to the server apparatus S1 (ST601).

After that, the server apparatus S1 performs verification processing of a platform of the server apparatus S2 (ST701), P3P negotiation processing (ST702) and transmission processing of private data PRID2 (ST703) with the server apparatus S2.

Modified Examples

The present invention may be variously modified other than the embodiments explained above.

For example, in the above embodiments, the case where the client apparatus C encodes privates data PRID and transmits to the server apparatus S1 was explained, but key data of encoded private data PRID already provided to the server apparatus S1 via other server apparatus or a recording medium, etc. may be transmitted from the client apparatus C to the server apparatus S1.

Also, an order of executing, for example, the verification of a platform of the server (ST1) and the P3P negotiation processing (ST2) shown in FIG. 2, etc. may be inverted.

Also, in the above embodiments, the cases where the client apparatus C uses private key data for encoding the private data PRID were explained as examples, but encoding may be performed by using common key data and the common key data may be encoded by public key data of the server apparatus S1 to transmit to the server apparatus S1.

Also, for example, in the step ST32 shown in FIG. 9, the security chip SC may generate unique random number data for itself, encode and store the same in the data VF, and the client apparatus C may encode and store the random number data in the data COD in the step ST36.

In this case, the security chip SC performs decoding in the step ST41 on condition that the random number data stored in the VF matches with that stored in the data COD.

The present invention can be applied to a system, wherein individual information and other private data have to be protected.

It should be understood by those skilled in the art that various modifications, combinations, subcombinations and alternations may occur depending on design requirements and other factors insofar as they are within the scope of the appended claims or the equivalents thereof.

**Claims**

1.  A software program which, if loaded into a memory of a computer is adapted to execute:

    a first step of verifying validity of a utilization side by matching first hash data of a program booted by the utilization side of data and second hash data stored in advance; and
    a second step of transmitting said first hash data and data to be used or key data for decoding the data to be used to the utilization side on condition that validity of said utilization side is confirmed in the first step.

2.  A software program as set forth in claim 1, wherein:

    said first hash data is forcibly generated at a utilization side at the time said program is booted at said utilization side and received by said computer from said utilization side; and
    said second hash data is hash data of a program for realizing a software environment required for using said data.

3.  A software program as set forth in claim 1 or 2, wherein said first step performs said matching after decoding said first hash data by using public key data of said utilization side.

4.  A software program as set forth in claim 1, 2 or 3,
    further comprising a third step for determining to perform said transmission in said second step or not based on first use condition data indicating a use condition of said data to be used and second use condition data indicating a use condition declared by said utilization side;
    wherein said second step transmits said data to be used or said key data to said utilization side on condition that said transmission is determined to be performed in said third step.

5.  A software program as set forth in claim 4, wherein said third step performs determination by using said second use condition data received from said utilization side.

6.  A software program as set forth in claim 5, wherein said second step encodes said first hash data, data to be used or key data for decoding the data to be used and said second use condition data by using public key data of said utilization side and transmits to said utilization side.

7.  A software program as set forth in claim 4, 5 or 6, wherein said second step transmits said first use condition data to said utilization side.

8.  A software program as set forth in claim 7, further comprising a fourth step of specifying identification data of said first use condition data already transmitted to said utilization side and transmitting a request for invalidating the first use condition data to said utilization side.

9.  A software program as set forth in claim 1, wherein said first step uses said first hash data received from said utilization side for said matching.

10. A software program as set forth in one of the preceding claims, wherein said first hash data includes respective hash data of a BIOS, loader, operating system and application program booted at said utilization side.

11. A software program as set forth in claim 10, wherein said first hash data further includes
    module data including hash data or public key data of an application program and signature data for the hash data.

12. A software program as set forth in one of the preceding claims, wherein said first hash data is generated by a tamper-resistant security chip at said utilization side.

13. A computer, comprising:

    an interface;
    a memory for storing a program; and
    an execution circuit for matching first hash data of a software program booted at a utilization side of data and second hash data stored in advance by following said program read from said memory and, on condition that validity of said utilization side is confirmed, transmitting said first hash data and data to be used or key data for decoding the data to be used to said utilization side via said interface.

14. A data processing method executed by a computer, comprising:

a first step of verifying validity of a utilization side by matching first hash data of a program booted by the utilization side of data and second hash data stored in advance; and
a second step of transmitting said first hash data and data to be used or key data for decoding the data to be used to the utilization side on condition that validity of said utilization side is confirmed in the first step.

15. A software program which, if loaded into the memory of a computer is adapted to execute
a first step of booting a program;
a second step of generating first hash data of the program booted in said first step and storing the same in a secured state;
a third step of transmitting first hash data generated in said second step to a data provider; and
a fourth step of authorizing use of data provided by said data provider, performed after said third step on condition that second hash data received from said data provider matches with said first hash data stored in said second step.

16. A software program as set forth in claim 15, wherein said forth step is performed after transmitting use condition data describing a use condition of said data to said data provider.

17. A software program as set froth in claim 16, further comprising a fifth step of using the data by following said use condition data after use of said data is authorized in said fourth step.

18. A software program as set forth in claim 17, further comprising:

a sixth step of transmitting a plurality of said use condition data to said data provider; and
a seventh step of using the data by following use condition data specified by said data provider among said plurality of use condition data transmitted in said sixth step after authorization of use of said data in said fourth step.

19. A software program as set forth in one of the claims 15 to 18, further comprising an eighth step for performing processing for transmitting said data provided by said data provider with other computer based on use condition data received from said data provider after authorization of use of said data in said fourth step.

20. A software program as set forth in claim 19, wherein said eighth step transmits said data to said other computer on condition that said other computer is provided with a software environment for protecting said data provided by said data provider, and said other computer declares that it satisfies a use condition described in said use condition data.

21. A software program as set forth in one of the claims 15 to 20, further comprising a ninth step of invalidating data already provided by said data provider in response to a request from said data provider.

22. A software program as set forth in one of the claims 15 to 21, for making a tamper-resistant electronic circuit provided to inside said computer to execute said first to third steps.

23. A software program as set forth in claim 22, wherein processing of encoding said hash data generated in said second step by using private key data of said tamer resistant electronic circuit and transmitting to said data provider is performed by the electronic circuit in said third step.

24. A software program as set forth in one of the claims 15 to 23, wherein said fourth step is executed in said tamper-resistant electronic circuit.

25. A software program as set forth in claim 24, wherein said fourth step determines whether said second hash data matches with said first hash data or not after decoding the second hash data by using a private key of said electronic circuit and, on condition that they are determined to be matched, decodes said data provided by said data provider by using the private key of said electronic circuit.

26. A software program as set forth in one of the claims 15 to 25, wherein said fourth step is executed by an operating system of said computer.

27. A software program as set forth in claim 26, wherein said fourth step determines whether said second hash data matches with said first hash data or not after decoding the second hash data by using a private key of said operating system and, on condition that they are determined to be matched, decodes said data provided by said data provided by using the private key of said operating system.

28. A computer, comprising:

an interface;
a memory for storing a first program and a second program for realizing a data protecting function; and
an execution circuit, when said first program is read from said memory and booted, for generating first hash data of said booted first program and storing to said memory in a secure state by following said second program read from said memory, transmitting said first hash data to a data provider via said interface and, on condition that second hash data received from said data provider via said interface matches with said first hash data read from said memory, authorizing use of data provided from said data provider.

29. A data processing method executed by a computer, comprising:

a first step of booting a program;
a second step of generating first hash data of a program booted in said first step and storing the same in a secure state;
a third step for transmitting first hash data generated in said second step to a data provider; and
a fourth step for authorizing use of data received from said data provider on condition that second hash data received from said data provider matches with said first hash data stored in said second step.

30. A communication system comprising a first computer as a data provider and a second computer as a data provided destination, wherein:

said first computer comprises
a first interface,
a first memory for storing a first program and second hash data; and
a first execution circuit for matching first hash data received from said second computer via said first interface and said second hash data read from said first memory and, on condition that validity of said second computer is confirmed, transmitting said first hash data and data to be used or key data for decoding the data to be used to said second computer via said second interface by following said first program read from said first memory;
and said second computer comprises
a second interface;
a second memory for storing a second program and a third program for realizing a data protecting function; and
a second execution circuit for, when said second program is read from said second memory and booted, generating said first hash data of said booted second program and storing to said second memory in a secure state by following said third program read from said second memory, transmitting said first hash data to said first computer via said second interface and, on condition that said first hash data received from said first computer via said second interface matches with said first hash data stored in said second memory in a secure state, authorizing use of said data to be used provided by said first computer.

31. A communication method, used between a first computer as a data provider and a second computer as a data provided destination, comprising:

a first step of generating first hash data of an booted program, storing the same in a secure state and transmitting said first hash data to said first computer, performed by said second computer;
a second step of matching the first hash data received from said second computer in said first step and second hash data stored in advance and, on condition that validity of said second computer is confirmed, transmitting said first hash data and data to be used or key data for decoding the data to be used to said second computer, performed by the first computer; and

a third step that said second computer uses said data to be used provided by said first computer on condition that said first hash data received in said second step matches with said first hash data stored in a said secure state in said first step.

# FIG. 1

# FIG. 2

C

S1

CLIENT
APPARATUS

VERIFYING SERVER PLATFORM (ST1)

P3P NEGOTIATION (ST2)

TRANSMITTING PRIVATE DATA (ST3)

SERVER
APPARATUS

# FIG. 3

U— AG :USER AGENT
PRF :PROFILE DATA
PR D :PRIVATE DATA

# FIG. 4

STARTING PRE-PROCESSING OF CLIENT

ST1 — RETRIEVING R-VBP AND R-OS-hash FROM OS VENFER AND STORING

ST2 — RETRIEVING R-P3P-hash FROM AP VENDER AND STORING

ST3 — RETRIEVING DISCLOSURE KEY CERTIFICATION DATA $Cert_{SC1}$, $Cert_{SC2}$, $Cert_{OS1}$ AND $Cert_{OS2}$ FROM CA AND STORING

END

# FIG. 5

**45** CPU

**SC** SECURITY CHIP

**40**

**42** I/F

**43 MEMORY**
- B DS
- LOADER
- OS
- P3P—AP
- PRG—S
- POL

S1, S2

# FIG. 6

| |
|---|
| P3P—AP |
| OS |
| LOADER |
| B DS |
| HARDWARE — SC |

# FIG. 7

PROCESSOR — 57

RANDOM NUMBER GENERATION CIRCUIT — 54

SIGNATURE/ ENCODING CIRCUIT — 55

50

I/O — 51

KEY GENERATION CIRCUIT — 52

HASH CIRCUIT — 53

$K_{pri-SC1}$

VBP

P3P-hash

56 MEMORY

VBP :VERIFICATION DATA OF BOOT PROGRAM

P3P− hash :HASH DATA

SC

EP 1 594 029 A2

# FIG. 8

```
         ┌─────────────────────────────────────────────┐
         │  STARTING PROCESSING AT BOOTING SERVER      │
         └─────────────────────────────────────────────┘
 ST11                        │
                ┌────────────────────────────┐    N
                < BOOT INSTRUCTED?            >──────┐
                └────────────────────────────┘      │
                        Y │                          │
         ┌─────────────────────────────────────────────┐
  ST12   │  CPU BOOTS BIOS, Loader,                    │
         │  OS AND P3P-AP SUCCESSIVELY                 │
         └─────────────────────────────────────────────┘
                          │
         ┌─────────────────────────────────────────────┐
  ST13   │  SC GENERATES VBP AND P3P-hash              │
         └─────────────────────────────────────────────┘
                          │
         ┌─────────────────────────────────────────────┐
  ST14   │  SC STORES VBP AND P3P-hash                 │
         └─────────────────────────────────────────────┘
                          │
                    ┌──────────┐
                    │   END    │
                    └──────────┘
```

# FIG. 9

EP 1 594 029 A2

CLIENT APPARATUS C                                    SERVER APPARATUS S1

PLATFORM VERIFICATION REQUEST  ST31

|                                                   | ST32 |
| SC GENERATES AND STORES $VF=E_{PK}(K_{pri-sc1}, VBP\|P3P\text{-}hash)$ | $\sim$ ST32 |

ST33          VF

**ST34** $\sim$ | VERIFYING VF BASED ON R-VBP AND R-P3P-hash |

P3P NEGOTIATION

**ST35** $\sim$ | VERIFYING POL BASED ON PRF |

**ST36** $\sim$ | GENERATING $COD=E_{PK}(K_{pub-sc1}, K\|$ $E_{SK}(K, VBP\|P3P\text{-}hash\|PRID)$ |

COD          ST37

| SC DECODES K | $\sim$ ST38 |

| SC DECODES VBP\|P3P-hash | $\sim$ ST39 |

| SC VERIFIES VBP AND P3P-hash IN ST39 BASED ON PHP AND P3P-hash IN ST32 | $\sim$ ST40 |

| SC DECODES PRID | $\sim$ ST41 |

| P3P_AP USES PRID | $\sim$ ST42 |

# FIG. 10

CLIENT APPARATUS C                                   SERVER APPARATUS S1

PLATFORM VERIFICATION REQUEST    ST51

SC GENERATES AND STORES        ST52
$VF = E_{PK}(K_{pri-sc1}, VBP \| P3P-hash)$

ST53                          VF

ST54    VERIFYING VF BASED ON R-VBP AND R-P3P-hash

ST55    VERIFYING POL BASED ON PRF    ◄  P3P NEGOTIATION

ST56    GENERATING
$COD = E_{PK}(K_{pub-OS1}, K \|$
$E_{SK}(K, VBP \| P3P-hash \| PRID)$

COD         ST57

OS DECODES K                        ST58

OS DECODES VBP \| P3P-hash           ST59

OS VERIFIES VBP AND P3P-hash
IN ST59 BASED ON PHP AND             ST60
P3P-hash IN ST52

OS DECODES PRID                      ST61

P3P_AP USES PRID                     ST62

EP 1 594 029 A2

# FIG. 11

CLIENT APPARATUS C                    SERVER APPARATUS S1

ACCESS — ST71

HTML DATA — ST72

POLICY REQUEST — ST73

POL REFERENCE DATA — ST74

POLICY REQUEST‖VERIFICATION REQUEST — ST75

EP 1 594 029 A2

# FIG. 12

EP 1 594 029 A2

CLIENT APPARATUS C            SERVER APPARATUS S1

ST76 — SC GENERATES AND STORES $VF1 = E_{PK}(K_{pri-sc1}, VBP \parallel P3P\text{-hash} \parallel POL)$

ST77 — VF

ST78 — VERIFYING VF1 BASED ON R-VBP AND R-P3P-hash

ST79 — VERIFYING POL

ST80 — GENERATING $COD1 = E_{PK}(K_{pub-sc1}, K \parallel E_{SK}(K, VBP \parallel P3P\text{-hash} \parallel PRID)$

ST81 — COD

ST82 — SC DECODES K

ST83 — SC DECODES VBP $\parallel$ P3P-hash

ST84 — SC VERIFIES VBP AND P3P-hash IN T83 BASED ON PHP AND P3P-hash IN ST76

ST85 — SC DECODES PRID

ST86 — P3P_AP USES PRID

# FIG. 13

EP 1 594 029 A2

CLIENT APPARATUS C                                                SERVER APPARATUS S1

ACCESS — ST101

HTML DATA — ST102

POLICY REQUEST — ST103

POL REFERENCE DATA — ST104

POLICY REQUEST ‖ VERIFICATION REQUEST — ST105

| SC GENERATES AND STORES | ST106 |
| VF1=$E_{PK}$($K_{pri-sc1}$, VBP‖P3P-hash‖POL1) | |

ST107 — VF2

| VERIFYING VF2 BASED ON R-VBP AND P3P-hash |

ST108

# FIG. 14

EP 1 594 029 A2

CLIENT APPARATUS C

SERVER APPARATUS S1

ST109 — VERIFYING POL1

ST110 — SELECTING DESIRED POL2 FROM POL1

ST111 — GENERATING
$COD2=E_{PK}(K_{pub-sc1}, K \parallel E_{SK}(K, POL2 \parallel VBP \parallel P3P\text{-}hash \parallel PRID)$

COD2 — ST112

SC DECODES K — ST113

SC DECODES POL2 $\parallel$ VBP $\parallel$ P3P-hash — ST114

SC VERIFIES VBP AND P3P-hash IN
ST114 BASED ON PHP AND P3P-hash IN ST106 — ST115

SC DECODES PRID — ST116

P3P_AP USES PRID BY FOLLOWING POL2 — ST117

# FIG. 15

EP 1 594 029 A2

CLIENT APPARATUS C                                                    SERVER APPARATUS S1

ST211 — GENERATING
$COD2 = E_{PK}(K_{pub-sc1}, K \parallel E_{SK}(K, POL2 \parallel VBP \parallel P3P\text{-}hash \parallel PRF \parallel PRID)$

COD3    ST212 →

| SC DECODES K | ST213 |

| SC DECODES POL2 $\parallel$ VBP $\parallel$ P3P-hash $\parallel$ PRF | ST214 |

| SC VERIFIES VBP AND P3P-hash IN ST214 BASED ON PHP AND P3P-hash IN ST106 | ST215 |

| SC DECODES PRID | ST216 |

| P3P_AP NEGOTIATES WITH SERVER APPARATUS S2 BY FOLLOWING POL2 AND PRF | ST217 |

# FIG. 16

CLIENT APPARATUS C                                                    SERVER APPARATUS S1

ST311 — GENERATING
$COD2=E_{PK}(K_{pub-sc1},\ K\ \|\ E_{SK}(K,\ POL2\ \|\ VBP\ \|\ P3P\text{-}hash\ \|\ PRF\ \|\ ID\text{-}PRID\ \|\ PRID))$

COD4  ST312

SC DECODES K — ST313

SC DECODES POL2 ‖ VBP ‖ P3P-hash ‖ PRF ‖ ID-PRID — ST314

SC VERIFIES VBP AND P3P-hash IN ST314 BASED ON PHP AND P3P-hash IN ST106 — ST315

SC DECODES PRID — ST316

P3P_AP NEGOTIATES WITH SERVER APPARATUS S2 BY FOLLOWING POL2 AND PRF — ST317

ST318 — GENERATING
$CANCEL=E_{PK}(K_{pub-sc1},\ K\ \|\ E_{SK}(K,\ ID\text{-}PRID))$

REQ  ST319

P3P_AP INVALIDATES PRID CORRESPONDING TO ID-PRID — ST320

EP 1 594 029 A2

# FIG. 17

EP 1 594 029 A2

# FIG. 18

C

S1

VERIFYING SERVER PLATFORM (ST1)

P3P NEGOTIATION (ST2)

TRANSMITTING PRIVATE DATA PRID1 (ST3)

ID OF SERVER APPARATUS S2 (ST504)

CLIENT APPARATUS

SERVER APPARATUS

S2

VERIFYING SERVER PLATFORM (ST505)

P3P NEGOTIATION (ST506)

TRANSMITTING PRIVATE DATA PRID2 (ST507)

SERVER APPARATUS

# FIG. 19

C

VERIFYING SERVER PLATFORM (ST1)

CLIENT APPARATUS

P3P NEGOTIATION (ST2)

TRANSMITTING PRIVATE DATA PRID1 AND PRID2 (ST601)

S1

SERVER APPARATUS

TRANSMITTING PRIVATE DATA PRID (ST602)

S2

SERVER APPARATUS

# FIG. 20

CLIENT APPARATUS

C

SERVER APPARATUS

S1

VERIFYING SERVER PLATFORM (ST1)

P3P NEGOTIATION (ST2)

TRANSMITTING PRIVATE DATA PRID1 AND PRID2 (ST601)

VERIFYING SERVER PLATFORM (ST701)

P3P NEGOTIATION (ST702)

TRANSMITTING PRIVATE DATA PRID2 (ST703)

S2

SERVER APPARATUS